(19) Europäisches Patentamt / European Patent Office / Office européen des brevets

(11) **EP 3 721 041 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(51) Int Cl.:
**E06B 3/663** (2006.01)          **E06B 3/677** (2006.01)

(21) Anmeldenummer: **18807372.0**

(86) Internationale Anmeldenummer:
**PCT/EP2018/082969**

(22) Anmeldetag: **29.11.2018**

(87) Internationale Veröffentlichungsnummer:
**WO 2019/110409 (13.06.2019 Gazette 2019/24)**

(54) **ISOLIERVERGLASUNG UMFASSEND DRUCKAUSGLEICHSKÖRPER MIT MEMBRAN UND KAPILLARE**

INSULATING GLAZING COMPRISING PRESSURE COMPENSATION BODY WITH MEMBRANE AND CAPILLARY

VITRAGE ISOLANT COMPRENANT UN CORPS DE COMPENSATION DE PRESSION POURVU DE MEMBRANE ET DE CAPILLAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2017 EP 17205924**

(43) Veröffentlichungstag der Anmeldung:
**14.10.2020 Patentblatt 2020/42**

(73) Patentinhaber: **SAINT-GOBAIN GLASS FRANCE**
**92400 Courbevoie (FR)**

(72) Erfinder:
• SCHREIBER, Walter
  52074 Aachen (DE)
• CARRE, Florian
  52351 Übach-Palenberg (DE)
• NÜSSER, Dirk
  52531 Übach-Palenberg (DE)
• SACU, Erol, Ertugrul
  52222 Stolberg (DE)

(74) Vertreter: **Schönen, Iris**
**Saint-Gobain Sekurit Deutschland GmbH & Co. KG**
**Herzogenrath R&D Centre - Patentabteilung**
**Glasstraße 1**
**52134 Herzogenrath (DE)**

(56) Entgegenhaltungen:
EP-A2- 0 345 211          WO-A1-90/02239
WO-A1-2014/095097          WO-A1-2017/064166
FR-A1- 2 671 128          US-A1- 2005 034 386

**Beschreibung**

Die Erfindung betrifft eine Isolierverglasung umfassend einen Druckausgleichskörper mit Membran und Kapillare, ein Verfahren zu deren Herstellung und deren Verwendung.

Gebäude verlieren häufig den größten Wärmeanteil über die Außenverglasung, so dass Isolierverglasungen im Zuge immer strengerer Energieeinsparverordnungen nicht mehr aus dem Gebäudebau wegzudenken sind. Unter energetischen Gesichtspunkten ist eine Maximierung des isolierend wirkenden Scheibenzwischenraums der Isolierverglasung wünschenswert um den Wärmedurchgang durch den Scheibenverbund zu senken. Die Größe der Scheibenzwischenräume einer Isolierverglasung wird jedoch durch die auf die Verglasung einwirkenden Klimalasten limitiert. Als Klimalasten werden in diesem Zusammenhang die durch Umwelteinflüsse in der Isolierverglasung auftretenden Biegespannungen bezeichnet.

Isolierverglasungen sind als hermetisch abgeriegeltes System konzipiert, bei dem die Scheibenzwischenräume weder miteinander noch mit der Umgebung kommunizieren. Dadurch wird verhindert, dass Feuchtigkeit aus der Umgebung in die Scheibenzwischenräume eindringt und dort kondensiert oder ein eventuell vorhandenes Füllgas entweicht. Nachteil dieser Bauweise ist jedoch der mangelnde Druckausgleich zwischen Scheibenzwischenräumen und Umgebung. Sofern die Topographie des Orts der Isolierglasfertigung und des Einbauortes der Isolierverglasung sich stark unterscheiden, beispielsweise Isolierglasfertigung bei 100 Meter über dem Meeresspiegel und Einbauort 1000 Meter über dem Meeresspiegel, so sind die Scheiben der Isolierverglasung nach Einbau einer permanenten Biegelast ausgesetzt. Dies wirkt sich insbesondere auf die Stabilität des Randbereichs aus. Im Randbereich sind die Scheiben mit einem zwischen den Einzelscheiben befindlichen Abstandhalter verklebt. Diese Verklebung wird je nach Druckunterschied zwischen Scheibenzwischenraum und Umgebung auf Druck oder Zug belastet, was je nach Stärke der einwirkenden Kräfte zu einer Undichtigkeit des Randverbundes und zu somit zu einem Versagen der Isolierverglasung führt. Darüber hinaus treten Klimalasten nicht nur durch Druckunterschiede zwischen Einbaulage und Fertigungsort auf, sondern auch durch wetterabhängige Luftdruckänderung. Dies ist auch problematisch hinsichtlich von Sonnenschutzsystemen, beispielsweise Lamellenrollos, die im Scheibenzwischenraum verbaut sein können. Ein Durchbiegen der Scheiben nach innen, in Richtung des Rollos, kann dieses in seiner Funktion behindern. Je größer das Luftvolumen der Isolierverglasung, desto größer der Einfluss der Klimalasten. Dadurch wird die Breite des Scheibenzwischenraums unerwünscht eingeschränkt.

Es sind verschiedene technische Konzepte bekannt, um einen Druckausgleich zwischen Scheibenzwischenraum und Atmosphäre zu erreichen. Das hierbei auftretende zentrale Problem ist die Vermeidung von Kondenswasser im Scheibenzwischenraum. Die Luftfeuchtigkeit im Scheibenzwischenraum ist möglichst gering zu halten um einer Kondensatbildung entgegenzuwirken. Darüber hinaus führt eine zu hohe Luftfeuchtigkeit beispielsweise zu Korrosionsschäden an metallischen Beschichtungen innerhalb der Isolierverglasung. Solche metallischen Beschichtungen werden auf den Innseiten der äußeren Scheiben einer Doppelverglasung oder bei einer Mehrfachverglasung auf einer der inneren Scheiben aufgebracht. In der Regel handelt es sich dabei um sogenannte Low-E-Beschichtungen, die die Transmission im infraroten Bereich des Lichtspektrums vermindern und so die starke Erwärmung des Gebäudeinnenraums durch Sonneneinstrahlung abmildern. Bei Systemen zum Druckausgleich zwischen Scheibenzwischenraum und Atmosphäre ist es somit von essentieller Bedeutung den Eintritt von Luftfeuchtigkeit in den Scheibenzwischenraum zu minimieren.

EP 2 006 481 A2 offenbart eine Vorrichtung zum Druckausgleich für Isolierglaseinheiten mit eingeschlossenem Gasvolumen, wobei in den Abstandshalter der Isolierverglasung ein Druckausgleichsventil eingebracht ist. Derartige Druckausgleichsventile weisen jedoch eine komplizierte Mechanik in Form mehrerer beweglicher Teile auf, die nicht nur eine erhöhte Fehleranfälligkeit des Systems bedingen, sondern auch erheblich höhere Produktionskosten verursachen. Ein weiterer Nachteil sind die längeren Druckausgleichszeiten dieser Isolierverglasungssysteme. Dadurch ist vor Auslieferung der Verglasung eine im Vergleich zu Systemen ohne Druckausgleich verlängerte Lagerung notwendig. Ferner ist mittels Druckausgleichsventilen nur ein Austausch begrenzter Volumina möglich, wodurch besonders bei großen Scheiben mehrere Ventile benötigt werden und jedes zusätzliche Ventil eine Schwächung des Systems und zusätzlichen Produktionsaufwand bedeutet.

Ein Druckausgleich zwischen Verglasungsinnenraum und Umgebung ist auch über Kapillarrohre möglich. Diese können auf verschiedenste Art und Weise in die Verglasung eingebracht werden, beispielsweise in Form eines unmittelbar durch den Abstandhalter hindurchtretenden Kapillarrohrs (CH 687937 A5) oder auch als Eckverbinder mit integriertem Kapillarrohr gemäß WO 2017/064160. Kapillarrohre weisen den Nachteil auf, dass eine gewisse Mindestlänge der Kapillare benötigt wird um den Eintritt von Wasserdampf in den inneren Scheibenzwischenraum zu verhindern. So wird in WO 2017/064160 eine Mindestlänge von etwa 60 cm in ausgestreckter Form vorgeschlagen. Bei einer kleinen Verglasungsgröße geht CH 687937 A5 von einem Kapillarrohr mit einem Innendurchmesser von 0,4 mm und einer Länge von 30 cm aus.

Aus US 2012/0017524 A1 sind Druckausgleichsröhren mit einer vergleichsweise geringen Länge von etwa 10 cm bekannt. Diese verhindern jedoch nicht den Eintritt von Feuchtigkeit in den Verglasungsinnenraum. Um eine Kondensatbildung in diesem Fall zu verhindern, sieht US 2012/0017524 A1 wasserabsorbierende Materialien im inneren Scheibenzwischenraum vor. Diese sind in der Lage Feuchtigkeit durch Absorption und Desorption zu puffern. Eine derartige Ausgestaltung ist in der industriellen Anwendung schwierig umsetzbar, da die absorbierenden Oberflächen optisch möglichst unauffällig im Scheibenzwischenraum angebracht werden sollten und ausreichend groß dimensioniert werden müssen.

In EP 0345211 A2 wird ein externer Trockenmittelbehälter über einen Rohrstutzen mit dem inneren Scheibenzwischenraum eines Isolierglases verbunden. Der Trockenmittelbehälter ist dabei austauschbar, so dass das Trockenmittel bei vollständiger Sättigung mit Feuchtigkeit ausgetauscht werden kann. In einer weiteren Ausführungsform enthält die Anordnung ein externes Expansionsgefäß, das Druckunterschiede zwischen Scheibeninnenraum und Umgebung durch Verformung kompensiert. Der Trockenmittelbehälter kann entweder selbst als Expansionsgefäß ausgeführt sein, oder zusätzlich zum Expansionsgefäß vorgesehen sein.

US 2005/0034386 A1 beschreibt einen Fensterrahmen mit einer im Rahmen integrierten Belüftungsröhre, die einen Luftaustauch und Druckausgleich zwischen Scheibeninnenraum und Umgebung ermöglicht. Die Belüftungsröhre dient dabei dem temporären Druckausgleich und wird nach Einbau der Isolierverglasung verschlossen. Dazu kann die Belüftungsröhre beispielsweise zusammengedrückt und von Dichtmittel umschlossen werden. In weiteren Ausführungsformen erfolgt die Belüftung durch Einstecken einer Hohlnadel oder durch Herausdrehen einer Schraube. Ferner sind Ausgestaltungen offenbart, in denen ein Trockenmittelmodul auf die Belüftungsröhre aufgesteckt ist, so dass die in den Scheibeninnenraum eintretende Luft vorgetrocknet wird.

In WO 90/02239 ist ein thermoplastischer Abstandhalter für Isolierverglasungen offenbart, in den ein zur Kompensation von Druckschwankungen vorgesehenes System aus einem Diaphragma zwischen zwei Kammern eingebracht ist. Das System aus Kammern und Diaphragma ist vollständig innerhalb des Abstandhaltergrundkörpers angebracht und mit diesem einstückig ausgeformt, bevorzugt durch Extrusion. Eine der Kammern ist über eine Öffnung mit dem inneren Scheibenzwischenraum verbunden, während die andere Kammer über eine Öffnung mit dem äußeren Scheibenzwischenraum kommuniziert. Beide Kammern sind durch das undurchlässige Diaphragma vollständig voneinander getrennt. Je nach den klimatischen Bedingungen und damit einhergehenden Druckverhältnissen in der Isolierverglasung wird das Diaphragma in Richtung der einen oder der anderen Kammer gedrückt. Dadurch werden temporäre Druckschwankungen kompensiert. Ein Druckausgleich ist mit diesem System nicht möglich. Um Druckunterschiede zwischen Produktionsort der Isolierverglasung und Einbauort der Isolierverglasung zu kompensieren, wird gemäß WO 90/02239 eine Hohlnadel an einer Ecke der Isolierverglasung eingeführt und nach erfolgtem Druckausgleich wieder entfernt. Ein solcher manueller Druckausgleich am Einbauort ist zeitaufwändig.

WO2014095097A1 offenbart eine Isolierverglasung umfassend einen hohlen Druckausgleichskörper mit einer darin befestigten gasdurchlässigen und dampfdiffusionsdichten Membran, ein Verfahren zur dessen Herstellung und die Verwendung einer solchen Isolierverglasung.

Die Aufgabe der Erfindung liegt darin eine verbesserte Isolierverglasung mit einem Druckausgleichssystem bereitzustellen, das die genannten Nachteile des Stands der Technik überwindet, langfristig einen Druckausgleich ermöglicht und das Eindringen von Feuchtigkeit in den Verglasungsinnenraum verhindert. Eine weitere Aufgabe der Erfindung ist es ein Verfahren zur Herstellung einer Isolierverglasung mit Druckausgleichssystem bereitzustellen, das auf einfache Art und Weise in den industriellen Fertigungsprozess integrierbar ist.

Die Aufgabe der vorliegenden Erfindung wird erfindungsgemäß durch eine Isolierverglasung nach dem unabhängigen Anspruch 1 gelöst. Bevorzugte Ausführungen der Erfindung gehen aus den Unteransprüchen hervor.

Die Isolierverglasung umfasst mindestens eine erste Scheibe, eine zweite Scheibe und einen umlaufenden, zwischen erster und zweiter Scheibe angeordneten, Abstandhalter. Der Abstandhalter für die erfindungsgemäße Isolierverglasung umfasst mindestens eine erste Scheibenkontaktfläche und eine parallel dazu verlaufende zweite Scheibenkontaktfläche, eine Verglasungsinnenraumfläche und eine Außenfläche. Die erste Scheibe ist an der ersten Scheibenkontaktfläche des Abstandhalters angebracht, während die zweite Scheibe an der zweiten Scheibenkontaktfläche angebracht ist. Somit umschließen die erste Scheibe, die zweite Scheibe und die Verglasungsinnenraumfläche einen inneren Scheibenzwischenraum. Die erfindungsgemäße Isolierverglasung umfasst ferner einen Druckausgleichskörper, der in eine Öffnung an der Außenfläche des Abstandhalters eingesetzt ist. Der Druckausgleichskörper bewirkt einen Luftaustausch und den damit einhergehenden Druckausgleich zwischen innerem Scheibenzwischenraum und Umgebungsluft. Dazu enthält der Druckausgleichskörper mindestens eine gasdurchlässige Membran und mindestens eine Kapillare. Die Kapillare verfügt über mindestens einen Kapillarenabschnitt, in dem der Innendurchmesser der Kapillare kleiner oder gleich 1,2 mm beträgt. Der innere Scheibenzwischenraum der Isolierverglasung ist dabei über die Kapillare und die Membran gasdurchlässig mit der die Isolierverglasung umgebenden Atmosphäre verbunden. Ein Druckausgleich im Sinne der Erfindung findet somit über einen Diffusionsprozess durch die Kapillare und die Membran statt. Die erfindungsgemäße Kombination von Membran und Kapillare bewirkt dabei, dass einerseits ein Luftaustausch und damit einhergehend ein Druckausgleich erfolgen kann, während andererseits eine hinreichende Dichtigkeit gegen Feuchtigkeitseintritt gegeben ist. Der Druckausgleich über den erfindungsgemäßen Druckausgleichskörper erfolgt permanent, wobei keinerlei manuelle Schritte erforderlich sind um diesen Druckausgleich zu initiieren.

Die erfindungsgemäße Isolierverglasung weist somit auch unter wechselnden Witterungsbedingungen eine verbesserte Stabilität des Randbereichs und eine erhöhte Lebensdauer auf, da das Auftreten von Biegespannungen durch den Druckausgleich zwischen Verglasungsinnenraum und Umgebung vermieden wird. Ferner wird der Eintritt von Feuchtigkeit in den Scheibenzwischenraum so minimiert, dass kein Kondenswasserabfall im Verglasungsinnenraum auftritt. Auf zeitintensive manuelle Maßnahmen zum Druckausgleich der Isolierverglasung am Einbauort kann darüber hinaus verzichtet werden.

Der erfindungsgemäße Druckausgleichskörper ist in eine Öffnung an der Außenfläche des Abstandhalters eingesetzt. Demnach kann der Druckausgleichskörper in jeden beliebigen Abstandhalter unabhängig von dessen Bauart eingesetzt werden und muss nicht bereits bei Produktion des Abstandhalters im Inneren des Abstandhalters integriert werden.

Die erste Scheibenkontaktfläche und die zweite Scheibenkontaktfläche stellen die Seiten des Abstandhalters dar, an denen beim Einbau des Abstandhalters die Montage der äußeren Scheiben (erste Scheibe und zweite Scheibe) einer Isolierverglasung erfolgt. Die erste Scheibenkontaktfläche und die zweite Scheibenkontaktfläche verlaufen parallel zueinander.

Die Verglasungsinnenraumfläche ist als die Fläche des Abstandhaltergrundkörpers definiert, die nach Einbau des Abstandhalters in einer Isolierverglasung in Richtung des Innenraums der Verglasung weisen. Die Verglasungsinnenraumfläche liegt dabei zwischen der ersten und der zweiten Scheibe.

Die Außenfläche des Abstandhaltergrundkörpers ist die der Verglasungsinnenraumfläche gegenüberliegende Seite, die vom Innenraum der Isolierverglasung weg in Richtung einer äußeren Versiegelung weist.

Die Außenfläche des Abstandhalters kann in einer möglichen Ausführungsform jeweils benachbart zu den Scheibenkontaktflächen abgewinkelt sein, wodurch eine erhöhte Stabilität des polymeren Grundkörpers erzielt wird. Die Außenfläche kann benachbart zu den Scheibenkontaktflächen beispielsweise um jeweils 30-60°, relativ zur Außenfläche, abgewinkelt sein.

Der äußere Scheibenzwischenraum ist als der von der ersten Scheibe, der zweiten Scheibe und der Außenfläche des Abstandhalters begrenzte Raum definiert.

Der Druckausgleichskörper ragt zumindest teilweise in den äußeren Scheibenzwischenraum hinein. Ein weiterer Teil des Druckausgleichskörpers ist in die Außenfläche des Abstandhalters eingebracht. Dadurch, dass der Druckausgleichskörper im äußeren Scheibenzwischenraum angebracht wird, kann dieser auch nachträglich, nach Zusammenstecken oder Extrusion des Abstandhalters, in diesen eingebracht werden. Die erfindungsgemäße Kombination von Membran und Kapillare in einem Druckausgleichskörper stellt eine besonders platzsparende Lösung zum Druckausgleich dar. Der Druckausgleichskörper ragt um weniger als 10 mm, bevorzugt um weniger als 5 mm, besonders bevorzugt um weniger als 2 mm über die umlaufende gemeinsame Kante der ersten Scheibe und der zweiten Scheibe hinaus. So kann der Druckausgleichskörper vollständig oder zumindest teilweise im Randverbund der Isolierverglasung integriert werden und stellt kein räumliches Hindernis beim Einbau der Isolierverglasung in einen Fensterrahmen dar. In einer besonders bevorzugten Ausführungsform ragt der Druckausgleichskörper im Wesentlichen nicht über die gemeinsame umlaufende Kante der Isolierverglasung hinaus. Somit ist der Druckausgleichskörper bündig im Randverbund, umfassend das Dichtmittel und die äußere Versiegelung, integriert und die Isolierverglasung kann ohne besondere Vorkehrungen in den Fensterrahmen montiert werden.

Diffusionsoffene Membranen sind in der Regel nicht selektiv, so dass nicht nur sämtliche gasförmigen Bestandteile der Luft (Stickstoff, Sauerstoff, Edelgase, Kohlendioxid) die Membran durchtreten, sondern diese auch durchlässig für Wasserdampf ist. Flüssiges Wasser, beispielsweise in Form eines an der äußeren Versiegelung der Isolierverglasung befindlichen Wassertropfens, wird von der Membran zurückgehalten und kann somit nicht in die Verglasung eintreten. Über die Wassertropfendichtigkeit hinausgehend ist die Membran entscheidend für die Steuerung des Luftvolumenstroms. Ohne Verwendung einer Membran ist der Luftvolumenstrom zu groß, wodurch auch die Gesamtmenge der in die Verglasung eingebrachten Feuchtigkeit unerwünscht hoch ist. Die Membran ermöglicht dabei eine Steuerung des Luftvolumenstroms durch gezielte Auswahl des Membranmaterials.

Der alleinige Einsatz einer Membran ist allerdings nicht hinreichend um zufriedenstellende Ergebnisse hinsichtlich des Feuchtigkeitseintritts in die Verglasung zu erzielen. Der Feuchtigkeitseintritt durch einen Druckausgleichskörper mit Membran ist zwar geringer als der ungehinderte Feuchtigkeitseintritt ohne Membran, jedoch ist dies nicht ausreichend um einen Kondenswasserabfall im Scheibenzwischenraum bei jeglicher Wetterlage zu unterbinden.

Der erfindungsgemäße Druckausgleichskörper enthält zusätzlich zu einer Membran eine Kapillare. Als Kapillare werden nach allgemeinem Verständnis langgestreckte Hohlräume mit sehr kleinen Innendurchmessern bezeichnet. Die vorliegende Kapillare hat in mindestens einem Abschnitt der Kapillare einen Innendurchmesser von maximal 1,2 mm. Versuche der Erfinder haben ergeben, dass in diesem Bereich gute Ergebnisse hinsichtlich der Belüftung des Scheibenzwischenraums und des Feuchtigkeitseintritts in den Scheibenzwischenraum erzielt werden.

Der Volumenstrom durch Kapillaren wird unter Annahme eines laminaren stationären Strömungsbildes der Kapillare und unter Annahme von Luft als homogenem Newton'schen Fluid mittels der Gleichung von Hagen-Poiseuille beschrieben:

$$\dot{V} = \frac{dV}{dt} = \frac{\pi \cdot r^4}{8 \cdot \eta} \frac{\Delta p}{l}$$

mit

| | |
|---|---|
| $\dot{V}$ | Volumenstrom in $\frac{m^3}{s}$ |
| $r$ | Innenradius der Kapillare in m |
| $\Delta p$ | Druckdifferenz zwischen beiden Enden der Kapillare in Pa |
| $\eta$ | dynamische Viskosität des durchströmenden Fluids in $Pa{\cdot}s$ |
| l | Länge der Kapillare in $m$ |

Als konstruktiv zu berücksichtigende Parameter ergeben sich demnach der Innenradius sowie die Länge der Kapillare. Die verbleibenden Größen, wie dynamische Viskosität und Druckdifferenz sind bei einer bestehenden Scheibenanordnung gegeben. Eine Halbierung des inneren Kapillarenradius führt gemäß Hagen-Poiseuille zu einem sechzehnfach niedrigeren Volumenstrom. Die Länge der Kapillare ist umgekehrt proportional zum Volumenstrom. Eine Halbierung der Länge der Kapillare hat somit eine Verdoppelung des Volumenstroms zur Folge.

Der in den Verglasungsinnenraum eintretende Volumenstrom sollte stark begrenzt werden, da mit einem Lufteintritt auch ein Feuchtigkeitseintritt einhergeht. Bei einem plötzlichen Eintritt großer Feuchtigkeitsmengen kann diese eventuell nicht hinreichend schnell von einem im Scheibenzwischenraum oder Abstandhalter vorhandenen Trockenmittel aufgenommen werden. Der Durchmesser von Kapillarrohren kann aufgrund der immer aufwändiger werdenden Herstellung nicht beliebig klein ausgestaltet werden. Gemäß im Stand der Technik bekannter Aufbauten wird diese Problematik gelöst, indem der Volumenstrom durch Einsatz von Kapillarrohre großer Länge (beispielsweise 60 cm) begrenzt wird. Die Integration von Kapillaren großer Länge gestaltet sich jedoch als schwierig. Einerseits sollten Teile der Kapillare aus Gründen der optisch ansprechenden Gestaltung nicht im inneren Scheibenzwischenraum sichtbar sein. Andererseits behindert eine in den äußeren Scheibenzwischenraum hineinragende Kapillare die in der Regel im industriellen Fertigungsprozess automatisiert erfolgende Randversiegelung der Isolierverglasung. Darüber hinaus ist der Einsatz von Kapillaren hinsichtlich einer mangelnden Wassertropfendichtigkeit problematisch. Sobald das zur Umgebung gewandte Ende der Kapillare mit flüssigem Wasser in Berührung kommt, wird dieses aufgrund des kapillaren Effekts durch die Kapillare hindurch in den inneren Scheibenzwischenraum eingesogen. Der alleinige Einsatz einer Kapillare liefert demnach ebenfalls keinen ausreichenden Schutz vor größeren Mengen Feuchtigkeit im Verglasungsinnenraum und ist darüber hinaus schwierig in den Produktionsprozess integrierbar. Von einer Reduktion der Wasserdampfdiffusion durch Einsatz großer Kapillarlängen wird aus den genannten Gründen abgesehen.

Die Erfinder haben herausgefunden, dass die Kombination einer Kapillare und einer Membran in einem Druckausgleichskörper den Feuchtigkeitseintrag in den inneren Scheibenzwischenraum wesentlich verbessert. Die Membran ist dabei entscheidend für eine Begrenzung des Luftvolumenstroms sowie die Gewährleistung der Wassertropfendichtigkeit, während über den Durchmesser der Kapillare die Wasserdampfdiffusion bestimmt wird. Dieser synergetische Effekt von Kapillare und Membran führt zu einer wesentlichen Verbesserung der Langzeitstabilität und Lebensdauer der Verglasung.

Der Druckausgleichskörper weist eine innere Oberfläche auf und eine äußere Oberfläche auf. Die äußere Oberfläche ist dabei in Richtung der Umgebung (Atmosphäre) orientiert, während die innere Oberfläche benachbart zum Abstandhalter liegt bzw. der Druckausgleichskörper mit der inneren Oberfläche in den Abstandhalter eingebracht ist. Die innere Oberfläche ist in Richtung des inneren Scheibenzwischenraums orientiert.

Die Kapillare weist mehrere Abschnitte auf, wobei diese den gleichen Innendurchmesser oder auch unterschiedliche Innendurchmesser haben können. Der maximale Kapillarendurchmesser von 1,2 mm gilt dabei in mindestens einem Kapillarenabschnitt. Die einzelnen Abschnitte der Kapillare können unmittelbar aneinandergrenzen oder nur indirekt über die Membran verbunden sein.

In einer möglichen Ausgestaltung der Erfindung ist der Innendurchmesser der Kapillare über die einzelnen Kapillarenabschnitte nicht konstant. Die Erfinder haben festgestellt, dass nicht über die gesamte Länge der Kapillare ein kleiner Innendurchmesser erforderlich ist. Der Produktionsaufwand zur Herstellung einer Kapillare oder Kapillarbohrung steigt mit kleiner werdendem Innendurchmesser stark an. Um diesen Aufwand und damit auch die Produktionskosten zu senken wird der Innendurchmesser von kleiner oder gleich 1,2 mm nicht in allen Abschnitten der Kapillare, jedoch in mindestens einem Abschnitt der Kapillare unterschritten. Bevorzugt beträgt der durchschnittliche Innendurchmesser der Kapillare pro Millimeter Kapillarentiefe kleiner oder gleich 1,2 mm. Die Berechnung des durchschnittlichen Innendurchmessers der Kapillare pro Millimeter Kapillarentiefe wird in der nachfolgenden Tabelle beispielhaft verdeutlicht. Die Gesamtlänge der Kapillare ergibt sich dabei als Summe der Längen der einzelnen Kapillarenabschnitte. Der durchschnittliche Durchmesser der Kapillare wird aus den einzelnen Innendurchmessern der Kapillarenabschnitte berechnet, wobei diese über die Länge der Abschnitte gewichtet werden.

**Tabelle 1**

| Kapillarenabschnitte | Länge | Durchmesser |
|---|---|---|
| 1 | 2,0 mm | 1,50 mm |
| 2 | 2,0 mm | 0,25 mm |
| 3 | 2,0 mm | 0,25 mm |
| 4 | 1,0 mm | 1,80 mm |
| | Gesamtlänge | Durchschnittlicher Durchmesser |
| insgesamt | 7,0 mm | 0,83 mm |

Bezüglich des Produktionsaufwands ist es ausreichend den Kapillarendurchmesser bis auf maximal 2,0 mm auszuweiten. Darüber hinaus erfolgt keine wesentliche Senkung des Produktionsaufwands mehr. Bevorzugt sind die Kapillarenabschnitte mit dem kleinsten Durchmesser benachbart zur Membran angeordnet. Dadurch wird der Luftvolumenstrom in unmittelbarer Nachbarschaft zur Membran gesteuert. Ferner weisen die an der äußeren und inneren Oberfläche des Druckausgleichskörpers liegenden Abschnitte größeren Innendurchmessers eine schwächere Kapillarität auf, da die Steighöhe einer Flüssigkeit in einer Kapillare sich umgekehrt proportional zum Kapillarradius verhält. Dies ist vorteilhaft hinsichtlich eines Schutzes vor Wassertropfen.

Bevorzugt liegt mindestens ein erster Abschnitt der Kapillare zwischen Membran und innerem Scheibenzwischenraum. Dadurch wird dieser Teil der Kapillare gegen Wassertropfen geschützt, so dass eventuell an der äußeren Oberfläche des Druckausgleichskörpers befindliches Wasser nicht durch die Kapillare in den inneren Scheibenzwischenraum gelangen kann.

In einer ersten bevorzugten Ausführungsform liegt ein zweiter Abschnitt der Kapillare zwischen Membran und umgebender Atmosphäre. Die Membran ist dabei zwischen mindestens einem ersten Kapillarenabschnitt und mindestens einem zweiten Kapillarenabschnitt angeordnet. Die Membran schützt den inneren Scheibenzwischenraum vor dem Eintritt von flüssigem Wasser und wird durch ihre Anordnung im Inneren des Druckausgleichskörpers auch selbst vor mechanischen Einflüssen geschützt. Bei einer Membran an einer der Oberflächen des Druckausgleichskörpers kann diese während des Fertigungsprozesses oder beim Einsetzten des Druckausgleichskörpers in den Abstandhalter leicht beschädigt werden. Eine im Inneren des Druckausgleichskörpers befindliche Membran ist hingegen optimal geschützt.

In einer besonders vorteilhaften Ausgestaltung der Erfindung wird die Membran im Inneren des Druckausgleichskörpers in ihrem Einbauzustand fixiert. Um die Membran im Inneren des Druckausgleichskörpers zu platzieren wird bevorzugt ein mindestens zweiteiliger Druckausgleichskörper verwendet. Dieser umfasst eine äußere Hülse, in die die Membran eingelegt wird. Mindestens ein erster Abschnitt der Kapillare ist in die Hülse eingebracht und erstreckt zwischen Membran und innerer Oberfläche des Druckausgleichskörpers. Auf die Membran ist ein Aufsteckteil aufgesetzt, das mindestens einen zweiten Kapillarenabschnitt umfasst. Die Membran ist zwischen Hülse und Aufsteckteil über eine Klebeverbindung oder durch Klemmwirkung fixiert. Das Aufsteckteil kann in die Hülse eingeklebt, eingeschraubt, eingepresst oder über eine Clip-Verbindung eingesetzt werden. Sofern eine Verklebung oder eine Clip-Verbindung gewählt werden, so wird die Membran bevorzugt eingeklebt um eine hinreichende Dichtigkeit zu gewährleisten und den Volumenstrom vollständig durch die Kapillare zu lenken. Bei Fixierung der Membran über eine Schraubverbindung kann das Aufsteckteil in die Hülse eingeschraubt oder auf die Hülse aufgeschraubt werden. Die Membran wird über die Schraubverbindung eingeklemmt, wobei eine weitere Abdichtung an den Rändern der Membran nicht notwendig ist. Auch in diesem Fall kann jedoch zusätzlich eine Klebeverbindung vorgesehen sein. Eine derartige Ausführungsform, bei der die Membran an ihrem Einbauort fixiert wird ist auch hinsichtlich der Verwendung standardisierter Ausgangsmaterialien vorteilhaft. Bei der beschriebenen Bauform können schichtförmige Membranmaterialien verwendet werden, die in einer Vielzahl von Ausführungsformen und Varianten als Rollenware kommerziell erhältlich sind.

In einer weiteren erfindungsgemäßen Ausführungsform ist die Membran im Druckausgleichskörper beweglich gelagert. Dabei umfasst der Druckausgleichskörper einen Hohlraum, in dem eine Membran beweglich gelagert ist. Die Membran ist in dieser Ausführungsform als dreidimensionaler Membrankörper ausgeführt, beispielsweise kugelförmig oder zylindrisch. Auch in dieser Ausführungsform bietet sich eine zweiteilige Ausgestaltung des Druckausgleichskörpers aus einer Hülse und einem Aufsteckteil an. Die Kapillarabschnitte in Hülse und Aufsteckteil können dabei wie bereits beschrieben ausgestaltet sein. Zwischen den Kapillarabschnitten der Hülse und des Aufsteckteils befindet sich ein Hohlraum umfassend den Membrankörper, beispielsweise eine kugelförmige Membran. Im Einbauzustand ist der Hohlraum über die Kapillare in der Hülse mit dem inneren Scheibenzwischenraum verbunden und steht über die Kapillare des Aufsteckteils mit der Umgebungsluft in Kontakt. Der Luftaustausch zwischen innerem Scheibenzwischenraum und Umgebung erfolgt ausschließlich über den Hohlraum. Je nach Druckzustand wird die Membran innerhalb des Hohlraums an das dem Scheibenzwischenraum oder der Umgebung benachbarte Ende des Hohlraums gedrückt. Dadurch liegt die Membran im Druckzustand im Bereich eines der in den Hohlraum mündenden Kapillarenden an und dichtet dieses so ab, dass der Luftaustausch vollständig durch die Membran hindurch stattfindet. Die Membran wird bevorzugt so dimensioniert, dass der Durchmesser des Membrankörpers im Wesentlichen dem Durchmesser des Hohlraums entspricht und die Membran somit bereits drucklosen Zustand die Wandung des Hohlraums berührt. Bevorzugt sind an den Enden des Hohlraums, die den Kapillarenden benachbart sind, Dichtbereiche ausgeformt, die der Aufnahme des Membrankörpers dienen. Die Dichtbereiche sind in ihrer Formgebung an die Form der Membran angepasst. Dadurch wird im Druckzustand eine möglichst gute Abdichtung zwischen Membran und Hohlraum erreicht, wodurch ein am Membrankörper vorbeifließender Volumenstrom verhindert wird. Die Dichtbereiche können beispielsweise als trichterförmige Abschnitte des Hohlraums ausgeführt sein, wobei das Ende des Trichters mit dünnerem Durchmesser in den jeweiligen Kapillarenabschnitt mündet. Eine Ausführungsform mit beweglich gelagerter Membran kann hinsichtlich einer vereinfachten Herstellung und des Druckausgleichskörpers vorteilhaft sein. Bei einer beweglich gelagerten Membran können die Fertigungstoleranzen der Komponenten vorteilhaft vergrößert werden.

Eine der beschriebenen zweiteiligen Ausführungen des Druckausgleichskörpers, bei denen die Membran im Inneren des Druckausgleichskörpers vorgesehen wird, ist auch vorteilhaft hinsichtlich der Produktionskosten. Die Produktionskosten hängen unter anderem von der Länge und dem Durchmesser der Kapillare, beispielsweise einer Kapillarbohrung ab. Bei einer zweiteiligen Ausführungsform wird die Länge der an einem Stück zu bohrenden Strecke der Kapillarbohrung wesentlich verkürzt. In dieser Ausführungsform können Hülse und Aufsteckteil unabhängig voneinander gebohrt werden. Dies trifft auf sämtliche der beschriebenen zweiteiligen Ausführungsformen, die eine innenliegende Membran aufweisen, zu.

In einer zweiten bevorzugten Ausführungsform ist die Membran an der äußeren Oberfläche des Druckausgleichskörpers angebracht. Sämtliche Abschnitte der Kapillare liegen in dieser Ausführungsform zwischen Membran und innerer Oberfläche des Druckausgleichskörpers. Dies hat den Vorteil, dass sämtliche Abschnitte der Kapillare gegen flüssiges Wasser geschützt sind, da Wassertropfen an der Membran abperlen. Des Weiteren ist ein derartiger Druckausgleichskörper einfach und kostengünstig herzustellen, da keine mehrteilige Fertigung notwendig ist, sondern ein monolithischer Grundkörper verwendet werden kann. Die Membran kann beispielsweise über eine Klebeverbindung oder eine Klemmverbindung an der äußeren Oberfläche angebracht sein. Als Klemmverbindung kommen sowohl Schraubverbindungen als auch Clip-Verbindungen in Frage, wobei Schraubverbindungen aufgrund ihrer größeren Stabilität bevorzugt werden. Beispielhaft für geeignete Schraubverbindungen ist an dieser Stelle ein Gewindering zu nennen, der auf die Membran aufgesetzt wird und mit einem Außengewinde des monolithischen Grundkörpers verschraubt ist. Eine Klebeverbindung weist ebenfalls eine hohe Stabilität auf und ist beispielsweise vorteilhaft um eine möglichst einfache und automatisierbare Produktion zu gewährleisten.

In einer dritten bevorzugten Ausführungsform kann die Membran auch auf die innere Oberfläche des Druckausgleichskörpers aufgebracht werden. Dabei gelten im Wesentlichen die für die zweite Ausführungsform genannten Vorteile sowie Ausführungsdetails. Die Kapillare ist im Fall der dritten Ausführungsform nicht gegen Wassertropfen geschützt, allerdings ist die Membran nach Montage gegen Beschädigungen an der äußeren Oberfläche geschützt.

Die Kapillare kann sowohl in Form einer Bohrung als auch als eingesetztes Kapillarrohr ausgeführt sein. Eine Bohrung ist vorteilhaft, da diese sehr präzise in den Druckausgleichskörper eingebracht werden kann und keine Abdichtung zwischen Druckausgleichskörper und Kapillarrohr erfolgen muss. Ferner können auch Kapillaren mit variablem Durchmesser in Form einer Bohrung erzeugt werden. Um einen variablen Durchmesser zu erzielen müssten andernfalls mehrere Kapillarrohre verschiedener Durchmesser hintereinander in den Druckausgleichskörper eingesetzt werden, was sich als relativ aufwändig erweist. Sofern der Durchmesser der Kapillare entlang eines Bauteils konstant ist, kann statt einer Kapillar-Bohrung ein Kapillarrohr eingebracht werden. Dies bietet sich insbesondere bei einem monolithischen Grundkörper an. Alternativ ist es auch möglich in einem mehrteiligen Druckausgleichskörper jeweils ein Kapillarrohr in die Hülse und in das Aufsteckteil einzubringen, wobei beide auch einen unterschiedlichen Innendurchmesser aufweisen können. Wie bereits diskutiert, erwiesen sich Bohrungen mit sehr kleinen Durchmessern im Kapillarbereich als aufwändig und somit auch kostspielig. Kapillarrohre mit geeigneten Innendurchmessern sind hingegen kostengünstig kommerziell erhältlich. Der Außendurchmesser dieser Kapillarrohre liegt in der Regel bei oberhalb von 1,5 mm, beispielsweise 1,8 mm Außendurchmesser bei 0,25 mm Innendurchmesser eines Kapillarrohrs. Demnach wird in das entsprechende Bauteil des Druckausgleichskörpers eine Bohrung mit dem Außendurchmesser des Kapillarrohrs eingebracht und das Kapillarrohr in diese Bohrung eingeschoben. An der äußeren Oberfläche und der inneren Oberfläche wird der Übergang zwischen Kapillarrohr und Druckausgleichskörper vorzugsweise abgedichtet.

Die Kapillarbohrung selbst und die Bohrungsöffnung zum Einsetzen eines Kapillarrohrs können mittels dem Fachmann bekannter mechanischer Bearbeitungstechniken erzeugt werden. Besonders bei Bohrungen kleinen Durchmessers, beispielsweise bei Bohrungsdurchmessern von kleiner oder gleich 1,2 mm, kann die Bohrung auch mittels Laserverfahren erzeugt werden. Dies ist besonders vorteilhaft aufgrund der hohen Präzision dieser Verfahren.

In einer bevorzugten Ausführungsform ist der Druckausgleichskörper mehrteilig aus einer Hülse und einem Aufsteckteil gefertigt, wobei Hülse und Aufsteckteil eine Kapillare in Form einer Bohrung umfassen.

In einer weiteren bevorzugten Ausführungsform umfasst der Druckausgleichskörper einen monolithischen Grundkörper, in den ein Kapillarrohr eingesetzt ist.

Bevorzugt weist die Kapillare in mindestens einem Abschnitt einen Innendurchmesser von kleiner oder gleich 0,80 mm, bevorzugt kleiner oder gleich 0,60 mm, besonders bevorzugt kleiner oder gleich 0,50 mm, auf. Insbesondere haben sich Innendurchmesser von 0,20 mm bis 0,40 mm, beispielsweise 0,25 mm, 0,30 mm oder 0,40 mm als besonders geeignet erwiesen. Je kleiner der Durchmesser der Kapillare, desto höher ist der der Wasserdampfdiffusion entgegengebrachte Widerstand. Mit sinkendem Durchmesser der Kapillare steigen jedoch die Produktionskosten. Ein Kapillardurchmesser von ungefähr 0,40 mm hat sich hinsichtlich beider Problemstellungen als gut geeignet erwiesen.

Die Membran des Druckausgleichskörpers ist wasserdicht und wasserdampfdurchlässig.

In einer bevorzugten Ausführungsform des Druckausgleichskörpers ist an mindestens einem der der Membran benachbarten Kapillarenabschnitte eine Aussparung angebracht, deren Durchmesser größer ist als der Innendurchmesser der Kapillare. Im Bereich der Aussparung wird der Durchmesser der Kapillare aufgeweitet um eine freie Beweglichkeit der Membran zu gewährleisten. Besonders bei kleinen Durchmessern der angrenzenden Kapillare in Kombination mit hohen Druckunterschieden zwischen Verglasungsinnenraum und Atmosphäre kann Membranmaterial in die benachbarten Kapillarenabschnitte eingesogen werden. Dadurch wird die freie Schwingung der Membran eingeschränkt und der Diffusionsvorgang durch die Membran beeinflusst. Wird eine Aussparung an mindestens einem der zur Membran benachbarten Enden der Kapillare vorgesehen, so kann dies verhindert werden. Durch die freie Schwingung der Membran baut sich in Nachbarschaft zur Membran ein Druckpolster auf, das vorteilhafterweise einen gleichmäßigen Luftvolumenstrom durch die Membran ermöglicht.

Die Aussparung weist bevorzugt einen Durchmesser zwischen 1,2 mm und 5,0 mm, besonders bevorzugt zwischen 1,2 mm und 2,5 mm, insbesondere zwischen 1,5 mm und 2,0 mm auf. Die Tiefe der Aussparung beträgt zwischen 0,1 mm und 1,0 mm, bevorzugt zwischen 0,1 mm und 0,5 mm, besonders bevorzugt zwischen 0,15 mm und 0,3 mm. Eine Aussparung mit diesen Dimensionen ermöglicht ein freies Schwingen der Membran und einen besonders gleichmäßigen Luftvolumenstrom.

Die Membran kann die verschiedensten gesinterten oder ungesinterten Polymere umfassen, beispielsweise Polypropylen, Polyester, Polyamid, Polyether, Polytetrafluorethylen, Polysulfon, Ethylen-Tetrafluorethylen-Copolymer, fluoriertes Ethylenpropylen, Tetrafluorethylen-/Perfluor-(Polyvinyl)-Ether-Copolymer und/oder Gemische und Copolymere davon. Halogenhaltige Polymere sind dabei hinsichtlich ihrer wasserabweisenden Eigenschaften vorteilhaft.

Besonders bevorzugt enthält die Membran mindestens ein Polymer aus der Gruppe der Polyhalogenolefine, vorzugsweise Polychlortrifluorethylen, Polyvinylidenfluorid, Polytetrafluorethylen und/oder Copolymere oder Gemische davon. Diese Materialien sind besonders vorteilhaft, da sie eine hydrophobe Oberfläche aufweisen, an der Wassertropfen abperlen.

In einer besonders bevorzugten Ausführungsform umfasst die Membran Polytetrafluorethylen (PTFE). PTFE ist sowohl chemisch inert als auch thermisch resistent, wodurch es eine hohe Alterungsbeständigkeit aufweist.

Die erwähnten polymeren Membranen können expandiert (gereckt) oder gesintert sein, vorzugsweise ist die Membran gesintert. Zur Herstellung expandierter Membranen wird das Grundmaterial durch Zug an den Kanten einer Materiallage gestreckt. Aus dieser auseinandergezogenen gereckten Materiallage werden daraufhin Membranstücke entsprechend der gewünschten Anwendung herausgeschnitten. Bei expandierten Membranen ist die Porengröße und Porenform eines einzelnen Materialstücks davon abhängig aus welchem Bereich der gereckten Materiallage das Fragment herausgeschnitten wurde. Ein Membranstück aus dem Randbereich der Materiallage weist tendenziell eher größere langgestreckte Poren auf, während ein Fragment aus dem mittleren Bereich wesentlich kleinere Poren besitzt. Gesinterte Membranen weisen im Gegensatz dazu eine sehr gleichmäßige Porengröße auf, die sehr gut kontrollierbar ist.

Im Sinne der Erfindung sind sowohl expandierte als auch gesinterte Membranen anwendbar. Gesinterte Membranen werden aufgrund der genannten Vorteile bevorzugt eingesetzt.

Besonders bevorzugt umfasst die Membran gesintertes PTFE.

In einer weiteren möglichen Ausführungsform ist die Membran eine keramische Membran mit metallischem Trägergerüst. Bevorzugt umfasst diese Aluminium und/oder Titan als Trägergerüst, wobei auf einer Oberfläche des Metalls ein poröses keramisches Metalloxid aufgebracht ist und auf der gegenüberliegenden Seite des Trägers das Metall durch elektrochemische Prozesse in definierten Bereichen entfernt ist. In den Bereichen, in denen die Metallschicht entfernt ist, ist die poröse Metalloxidschicht von beiden Seiten des Trägergerüstes zugänglich und es erfolgt eine Diffusion von Gasen durch die Membran.

Die Membran weist bevorzugt eine Wasserdampfdurchlässigkeit von mehr als 50 g/(Tag m$^2$) und weniger als 400 g/(Tag m$^2$) gemessen nach dem Verfahren ASTM E96-10 auf. Bevorzugt weist die Membran eine Wasserdampfdurchlässigkeit gemessen nach dem Verfahren ASTM E96-10 von mehr als 70 g/(Tag m2) und weniger als 350 g/(Tag m$^2$), bevorzugter von mehr als 100 g/(Tag m$^2$) und weniger als 300 g/(Tag m$^2$), noch bevorzugter von mehr als 120 g/(Tag m$^2$) und weniger als 250 g/(Tag m$^2$) auf.

Wie bereits erwähnt, entfällt mittels des erfindungsgemäßen Druckausgleichskörpers die Notwendigkeit Kapillaren großer Länge einzusetzen. Bevorzugt beträgt die Gesamtlänge der Kapillare (Summe der Länge sämtlicher Kapillarenabschnitte) kleiner oder gleich 6,0 cm. Es konnte festgestellt werden, dass bereits eine Kapillarenlänge von kleiner oder gleich 2,0 cm, in erfindungsgemäßer Kombination mit einer Membran, genügend ist um ein sehr gutes Ergebnis hinsichtlich einer Minimierung der im inneren Scheibenzwischenraum auftretenden Feuchtigkeit zu erreichen. In der Regel ist dazu sogar eine Kapillarenlänge von kleiner oder gleich 1,0 cm hinreichend. Die üblicherweise im erfindungsgemäßen Druckausgleichskörper eingesetzten Kapillarenlängen betragen zwischen 0,4 cm und 1,0 cm, beispielsweise ungefähr 6 mm. Eine möglichst kurze Länge der Kapillare ist vorteilhaft im Hinblick auf eine einfache und optisch unauffällige Integration des Druckausgleichskörpers in den Randverbund der Scheibe.

Die Höhe des Druckausgleichskörpers, gemessen zwischen der inneren Oberfläche und der äußeren Oberfläche des Druckausgleichskörpers, wird im Wesentlichen durch die gewünschte Kapillarlänge bestimmt. Der Druckausgleichskörper hat bevorzugt eine Höhe von kleiner oder gleich 2,0 cm, besonders bevorzugt kleiner oder gleich 1,0 cm, insbesondere 0,4 cm bis 1,0 cm, beispielsweise ungefähr 8 mm.

Als Abstandhalter der erfindungsgemäßen Isolierverglasung können die verschiedensten dem Fachmann bekannten Abstandhalter verwendet werden, da die erfindungsgemäße Lösung mit beliebigen Abstandhaltern kompatibel ist.

Der Druckausgleichskörper ist über eine Schraubverbindung, eine Clipverbindung oder eine Klebeverbindung in die Außenfläche des Abstandhalters eingebracht. Der Druckausgleichskörper kann auch mit dem Abstandhalter verpresst werden.

In einer möglichen Ausführungsform weist die erfindungsgemäße Isolierverglasung einen Abstandhalter mit polymerem oder metallischem Grundkörper umfassend mindestens eine Hohlkammer auf. Ein geeigneter Abstandhalter mit polymerem Grundkörper ist beispielsweise in WO 2013/104507 A1 offenbart.

Dem Fachmann bekannte Hohlprofilabstandhalter enthalten mindestens eine Hohlkammer in einem in der Regel polymeren oder metallischen Grundkörper. Die Hohlkammer grenzt an die Verglasungsinnenraumfläche, wobei die Verglasungsinnenraumfläche sich oberhalb der Hohlkammer befindet und die Außenfläche des Abstandhalters sich unterhalb der Hohlkammer befindet. Oberhalb ist in diesem Zusammenhang als dem inneren Scheibenzwischenraum der Isolierverglasung zugewandt und unterhalb als dem Scheibeninnenraum abgewandt definiert.

Die Hohlkammer des Abstandhalters der erfindungsgemäßen Isolierverglasung führt zu einer Gewichtsreduktion im Vergleich zu einem massiv ausgeformten Abstandhalter und steht zur Aufnahme von weiteren Komponenten, wie beispielsweise eines Trockenmittels, zur Verfügung.

Vorzugsweise ist der Druckausgleichskörper über eine Öffnung in der Außenfläche des Abstandhalters eingesetzt und mündet in die Hohlkammer. Die Öffnung kann beispielsweise in Form eines Bohrlochs ausgeführt sein. Die über den Druckausgleichskörper eintretende Luft wird somit zunächst in die Hohlkammer geleitet. Bevorzugt ist ein Trockenmittel in die Hohlkammer eingebracht, so dass der in die Hohlkammer einströmenden Luft sofort möglicherweise vorhandene Restfeuchte entzogen wird.

In einer weiteren möglichen Ausführungsform ist der Druckausgleichskörper ebenfalls an der Außenfläche des Abstandhalters eingesetzt und ragt durch den Abstandhalter hindurch bis zur Verglasungsinnenraumfläche. Diese Ausführungsform ist vorteilhaft um die Länge der Kapillare bei gleichem Platzbedarf der Gesamtanordnung zu erhöhen. Bevorzugt ragen der Druckausgleichskörper sowie die Kapillare des Druckausgleichskörpers nicht in den inneren Scheibenzwischenraum hinein um das Erscheinungsbild der Isolierverglasung nicht zu stören.

Ein durch den Abstandhalter hindurch bis zur Verglasungsinnenraumfläche ragender Druckausgleichskörper wird auch bevorzugt bei Abstandhaltern, die über keine Hohlkammer verfügen, eingesetzt.

In einer alternativen Ausführungsform kann die Kapillare des Druckausgleichskörpers auch in den inneren Scheibenzwischenraum hineinragen. Die Kapillare ragt dabei bevorzugt maximal 1,0 cm in den inneren Scheibenzwischenraum hinein um das optisch ansprechende Erscheinungsbild der Verglasung nicht zu beeinträchtigen.

Der Druckausgleichskörper enthält bevorzugt eine Verengung in Nachbarschaft zu seiner inneren Oberfläche. Im Bereich der Verengung ist der äußere Durchmesser des Druckausgleichskörpers geringer als im verbleibenden Bereich des Druckausgleichskörpers. Über diese Verengung ist der Druckausgleichskörper in die Öffnung an der Außenfläche des Abstandhalters eingesetzt. Dies ist vorteilhaft, da an der Stelle der Verengung auf einfache Art und Weise eine Abdichtung zwischen Abstandhalter und Druckausgleichskörper erfolgen kann. Als Dichtmaterial kommen dabei die zur Verklebung der Scheiben an der ersten und zweiten Scheibenkontaktfläche des Abstandhalters genannten Dichtstoffe in Frage.

Die Verglasungsinnenraumfläche des Hohlprofil-Abstandhalters umfasst mindestens einen permeablen Bereich, der die Hohlkammer mit dem inneren Scheibenzwischenraum gasdurchlässig verbindet. Die über den Druckausgleichskörper in die Hohlkammer einströmende Luft kann in diesem permeablen Bereich in den inneren Scheibenzwischenraum gelangen. Der permeable Bereich kann entweder aus einem gasdurchlässigen Material gefertigt sein oder auch Lufteinlässe in Form von Öffnungen enthalten.

In einer bevorzugten Ausführungsform des Hohlkörperabstandhalters weist die Verglasungsinnenraumfläche mindestens einen Lufteinlass auf. Bevorzugt sind mehrere Lufteinlässe in der Verglasungsinnenraumfläche angebracht. Die Gesamtzahl der Lufteinlässe hängt dabei von der Größe der Isolierverglasung ab. Die Lufteinlässe verbinden die Hohlkammer mit dem inneren Scheibenzwischenraum, wodurch ein Gasaustausch zwischen diesen möglich wird. Dadurch wird eine Aufnahme von Luftfeuchtigkeit durch das in der Hohlkammer befindliche Trockenmittel erlaubt und somit ein Beschlagen der Scheiben verhindert. Die Lufteinlässe sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus der Hohlkammer in den inneren Scheibenzwischenraum eindringen kann.

In einer anderen möglichen Ausführungsform enthält die erfindungsgemäße Isolierverglasung einen spritzbaren thermoplastischen Abstandhalter aus einem Dichtmaterial. Derartige Abstandhalter sind beispielsweise aus DE 696 07 473 und WO 2015/197491 A1 bekannt. In diesem Fall kann der Druckausgleichskörper mangels einer Hohlkammer so in den Abstandhalter eingebracht werden, dass die innere Oberfläche des Druckausgleichskörpers bis zur Verglasungsinnenraumfläche in den Abstandhalter hineinragt.

In beiden erwähnten Ausführungsformen des Abstandhalters enthält das Trockenmittel bevorzugt Kieselgele, Molekularsiebe, $CaCl_2$, $Na_2SO_4$, Aktivkohle, Silikate, Bentonite, Zeolithe und/oder Gemische davon. Dies ist vorteilhaft, da so die im inneren Scheibenzwischenraum vorhandene Restfeuchte gebunden werden kann. Das Trockenmittel ist bevorzugt in den Grundkörper des Abstandhalters eingearbeitet. Bei spritzbaren thermoplastischen Abstandhaltern wird das Trockenmittel in der Regel im spritzbaren Dichtmaterial integriert. Bei Hohlkörperabstandhaltern befindet sich das Trockenmittel bevorzugt in der Hohlkammer des Grundkörpers.

In einer bevorzugten Ausführungsform umfasst der Druckausgleichskörper Metalle oder gasdichte Kunststoffe, bevorzugt Aluminium, Edelstahl, Polyethylenvinylalkohol (EVOH), Polyethylen niederer Dichte (LDPE) und/oder biaxial orientierte Polypropylen-Folie (BOPP).

Mehrteilige Druckausgleichskörper umfassend eine Hülse und ein Aufsteckteil werden bevorzugt aus metallischen Materialien, besonders bevorzugt aus Aluminium oder Edelstahl, gefertigt. Metalle weisen in dieser Hinsicht eine vorteilhafte Stabilität und gute Bearbeitbarkeit sowie die erforderliche Gasdichtigkeit auf.

Wird der Druckausgleichskörper als monolithisches Bauteil vorgesehen, so werden bevorzugt Kunststoffe, besonders bevorzugt Polyethylenvinylalkohol, eingesetzt. Der Einsatz von Kunststoffmaterialien ermöglicht eine kostengünstige Fertigung in hohen Stückzahlen. Da Kunststoffe in der Regel nicht gasdicht sind können diesbezüglich bei Bedarf weitere Maßnahmen getroffen werden. Ein in den Kunststoffkörper eingesetztes Kapillarrohr kann aus einem Metall (z.B. Edelstahl) bestehen um hier Abhilfe zu schaffen. Ferner kann die äußere Oberfläche des Druckausgleichskörpers im Bereich außerhalb der Kapillaröffnung abgedichtet werden. Dies ist jedoch nicht zwangsläufig erforderlich, da je nach Material des Bauteils, die Diffusion durch den Kunststoffkörper gegenüber der Strömung durch die Kapillare vernachlässigbar ist.

In einer bevorzugten Ausführungsform ist der Abstandhalter ein metallischer Hohlprofilabstandhalter. Dies hat den Vorteil, dass metallische Abstandhalter gasdicht sind und es keiner Barrierefolien bedarf um die Außenfläche des Abstandhalters abzudichten.

In einer weiteren bevorzugten Ausführungsform des Hohlprofilabstandhalters umfasst dieser einen polymeren Grundkörper. Dies ist vorteilhaft, da die Wärmeleitfähigkeit von Kunststoffen wesentlich geringer ist als die Wärmeleitfähigkeit von Metallen. Bevorzugt ist mindestens auf der Außenfläche des Abstandhalters, bevorzugt auf der Außenfläche und auf einem Teil der Scheibenkontaktflächen, eine gas- und dampfdichte Barriere aufgebracht ist. Die gas- und dampfdichte Barriere verbessert die Dichtigkeit des Abstandhalters gegen Gasverlust und Eindringen von Feuchtigkeit.

Bevorzugt ist die Barriere auf etwa der Hälfte bis zwei Drittel der Scheibenkontaktflächen aufgebracht.

In einer bevorzugten Ausführungsform ist die erfindungsgemäße Isolierverglasung mindestens eine Dreifachverglasung, wobei an der ersten und/oder zweiten Scheibe eine weitere Scheibe über einen weiteren Abstandhalter angebracht ist.

Besonders bevorzugt können auch Doppelabstandhalter für Dreifachverglasungen verwendet werden, bei denen die dritte Scheibe beispielsweise in eine Nut zwischen der ersten Scheibe und der zweiten Scheibe eingesetzt wird. Derartige Abstandhalter sind unter anderem aus WO 2014/198431 A1 bekannt. Bevorzugt ist in der Nut des Abstandhalters eine Scheibe aus nicht vorgespanntem Glas eingesetzt, die eine sogenannte Low-E-Beschichtung aufweist.

Nicht vorgespannt im Sinne der Erfindung bezeichnet eine Scheibe die weder thermischen noch chemischen Vorspannverfahren unterzogen wurde. Derartige Verfahren sind dem Fachmann hinlänglich bekannt.

Durch Aufbringen von Low-E-Beschichtungen auf eine der Scheiben einer Isolierverglasung kann das Wärmedämmvermögen der Isolierverglasung noch weiter gesteigert und verbessert werden. Sogenannte Low-E-Beschichtungen bieten eine effektive Möglichkeit Infrarotstrahlung bereits vor Eintritt in den Wohnraum abzuschirmen und gleichzeitig Tageslicht hindurchzulassen. Low-E-Beschichtungen sind Wärmestrahlung reflektierende Beschichtungen, die einen erheblichen Teil der Infrarotstrahlung reflektieren, was im Sommer zu einer verringerten Erwärmung des Wohnraums führt. Die verschiedensten Low-E-Beschichtungen sind beispielsweise bekannt aus DE 10 2009 006 062 A1, WO 2007/101964 A1, EP 0 912 455 B1, DE 199 27 683 C1, EP 1 218 307 B1 und EP 1 917 222 B1. Derartige Low-E-Beschichtungen bewirken bei Sonneneinstrahlung eine Erwärmung der Scheibe bedingt, die eine Ausdehnung der Scheibe und damit einhergehende zusätzliche Spannungen bedingt. Zur Kompensation dieser Spannungen wird die mittlere Scheibe einer Isolierverglasung nach dem Stand der Technik häufig vorgespannt. Bei Verwendung von Doppelabstandhaltern, bei denen die dritte Scheibe spannungsfrei in einer Nut eingebracht wird, können Spannungen verringert werden so dass in diesem Fall vollständig auf ein Vorspannen der mittleren Scheibe verzichtet werden kann.

Es können auch mehrere Druckausgleichskörper in einer Verglasung angebracht sein. Je nach Größe der Isolierverglasung ist der durch einen einzelnen Druckausgleichskörper eintretende bzw. austretende Volumenstrom nicht ausreichend für einen hinreichend schnellen Druckausgleich. In diesem Fall werden zwei oder mehr Druckausgleichskörper innerhalb des Abstandhalters der Isolierverglasung vorgesehen. Der Fachmann kann durch einfache Versuche ermitteln ob ein Druckausgleichskörper ausreichend ist oder mehrere vorgesehen werden müssen.

Der erfindungsgemäße Druckausgleichskörper wird bevorzugt so im Abstandhalter der Isolierverglasung positioniert, dass er in Einbaulage der Verglasung im Gebäude im oberen Drittel der Verglasung angebracht ist. Ferner wird der Druckausgleichskörper bevorzugt an einer in Einbaulage senkrecht angeordneten Außenfläche des Abstandhalters montiert. Beide Maßnahmen dienen der Vermeidung von Staunässe im Bereich des Druckausgleichskörpers.

Handelt es sich bei der Isolierverglasung um eine Dreifach- oder Mehrfachverglasung, so kann ein Druckausgleichskörper für jeden Scheibenzwischenraum vorgesehen werden. Alternativ ist ein Druckausgleichskörper für mehrere Scheibenzwischenräume ausreichend sofern kommunizierende Scheibenzwischenräume vorgesehen sind. Dies kann beispielsweise durch eine Öffnung in der mittleren Scheibe einer Dreifachverglasung oder auch durch eine kommunizierende Verbindung innerhalb eines Dreifachabstandhalters bewerkstelligt werden.

Die erfindungsgemäße Isolierverglasung ist besonders geeignet um Einbauten im Scheibenzwischenraum aufzunehmen. Besonders im Fall von beweglichen Einbauten, wie Jalousien, behindert eine konkave Verformung der Scheiben durch Klimalasten die Funktion dieser Einbauten. Gegebenenfalls findet sogar eine Beschädigung der inneren Scheibenoberflächen durch eine entlanggleitende Jalousie statt. Ferner besitzen Isolierverglasungen mit Jalousien ein vergleichsweise höheres Gasvolumen, da der die Jalousie aufnehmende Scheibenzwischenraum in der Regel eine Breite von mindestens 27 mm besitzt. Vor diesem Hintergrund ist ein Druckausgleich bei Isolierverglasungen mit Einbauten in einem der Scheibenzwischenräume von besonderer Bedeutung. Der erfindungsgemäße Druckausgleichskörper ermöglicht durch einen Druckausgleich zwischen Scheibenzwischenraum und Atmosphäre eine fehlerfreie Funktion der Einbauten.

Die erste Scheibe und/oder die zweite Scheibe der Isolierverglasung enthalten bevorzugt Glas, besonders bevorzugt Quarzglas, Borosilikatglas, Kalk-Natron-Glas und/oder Gemische davon. Die erste und/oder zweite Scheibe der Isolierverglasung können auch thermoplastische polymere Scheiben umfassen. Thermoplastische polymere Scheiben umfassen bevorzugt Polycarbonat, Polymethylmethacrylat und/oder Copolymere und/oder Gemische davon. Darüber hinausgehende Scheiben der Isolierverglasung können die gleiche Zusammensetzung haben wie für die erste Scheibe und die zweite Scheibe erwähnt.

Die erste Scheibe und die zweite Scheibe verfügen über eine Dicke von 2 mm bis 50 mm, bevorzugt 2 mm bis 10 mm, besonders bevorzugt 4 mm bis 6 mm, wobei beide Scheiben auch unterschiedliche Dicken haben können.

Der äußere Scheibenzwischenraum, begrenzt durch erste Scheibe, zweite Scheibe und Außenfläche des Abstandhalters, ist zumindest teilweise, bevorzugt vollständig, mit einer äußeren Versiegelung verfüllt. Dadurch wird eine sehr gute mechanische Stabilisierung des Randverbunds erzielt. Ferner umgibt die Versiegelung den Druckausgleichskörper und schützt diesen auf diese Weise gegenüber mechanischer Einwirkung von außen.

Bevorzugt enthält die äußere Versiegelung Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additionsvernetzten Silikonkautschuk, Polyurethane und/oder Butylkautschuk.

Das Dichtmittel zwischen der ersten Scheibenkontaktfläche und der ersten Scheibe, beziehungsweise zwischen der zweiten Scheibenkontaktfläche und der zweiten Scheibe, enthält bevorzugt ein Polyisobutylen. Das Polyisobutylen kann ein vernetzendes oder nicht vernetzendes Polyisobutylen sein.

In einer bevorzugten Ausführungsform ist die gas- und dampfdichte Barriere auf der Außenfläche eines polymeren Abstandhalters als Folie ausgeführt. Diese Barrierefolie enthält mindestens eine polymere Schicht sowie eine metallische Schicht oder eine keramische Schicht. Dabei beträgt die Schichtdicke der polymeren Schicht zwischen 5 $\mu$m und 80 $\mu$m, während metallische Schichten und/oder keramische Schichten mit einer Dicke von 10 nm bis 200 nm eingesetzt werden. Innerhalb der genannten Schichtdicken wird eine besonders gute Dichtigkeit der Barrierefolie erreicht. Die Barrierefolie kann auf dem polymeren Grundkörper aufgebracht werden, beispielsweise geklebt werden. Alternativ kann die Folie mit dem Grundkörper zusammen co-extrudiert werden.

Besonders bevorzugt enthält die Barrierefolie mindestens zwei metallische Schichten und/oder keramische Schichten, die alternierend mit mindestens einer polymeren Schicht angeordnet sind. Die Schichtdicken der einzelnen Schichten sind bevorzugt wie im vorhergehenden Absatz beschrieben. Bevorzugt werden die außen liegenden Schichten dabei von der polymeren Schicht gebildet. In dieser Anordnung sind die metallischen Schichten besonders gut vor Beschädigung geschützt. Die alternierenden Schichten der Barrierefolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verwendung einer Barrierefolie mit alternierender Schichtenabfolge ist besonders vorteilhaft im Hinblick auf die Dichtigkeit des Systems. Ein Fehler in einer der Schichten führt dabei nicht zu einem Funktionsverlust der Barrierefolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.

Die polymere Schicht der Folie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon. Die metallische Schicht enthält bevorzugt Eisen, Aluminium, Silber, Kupfer, Gold, Chrom und/oder Legierungen oder Oxide davon. Die keramische Schicht der Folie enthält bevorzugt Siliziumoxide und/oder Siliziumnitride.

In einer alternativen bevorzugten Ausführungsform ist die gas- und dampfdichte Barriere bevorzugt als Beschichtung ausgeführt. Die Beschichtung enthält Aluminium, Aluminiumoxide und / oder Siliciumoxide und wird bevorzugt über ein PVD-Verfahren (physikalische Gasphasenabscheidung) aufgebracht. Dadurch kann das Herstellungsverfahren erheblich vereinfacht werden, da der polymere Grundkörper direkt nach der Herstellung, zum Beispiel durch Extrusion, mit der Barrierebeschichtung versehen wird und kein gesonderter Schritt zum Aufbringen einer Folie nötig ist. Die Beschichtung mit den genannten Materialien liefert besonders gute Ergebnisse im Hinblick auf Dichtigkeit und zeigt zusätzlich exzellente Haftungseigenschaften zu den in Isolierverglasungen verwendeten Materialien der äußeren Versiegelung.

In einer besonders bevorzugten Ausführungsform weist die gas- und dampfdichte Barriere mindestens eine metallische Schicht oder keramische Schicht auf, die als Beschichtung ausgeführt ist und Aluminium, Aluminiumoxide und / oder Siliciumoxide enthält und bevorzugt über ein PVD-Verfahren (physikalische Gasphasenabscheidung) aufgebracht ist.

Bevorzugt ist der Abstandhalter ein Hohlprofilabstandhalter mit polymerem Grundkörper.

Der polymere Grundkörper enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon. Mit diesen Materialien werden besonders gute Ergebnisse erzielt.

Bevorzugt ist der polymere Grundkörper glasfaserverstärkt. Durch die Wahl des Glasfaseranteils im Grundkörper kann der Wärmeausdehnungskoeffizient des Grundkörpers variiert und angepasst werden. Durch Anpassung des Wärmeausdehnungskoeffizienten des polymeren Grundkörpers und der Barrierefolie oder -beschichtung lassen sich temperaturbedingte Spannungen zwischen den unterschiedlichen Materialien und ein Abplatzen der Barrierefolie oder -beschichtung vermeiden. Der Grundkörper weist bevorzugt einen Glasfaseranteil von 20 % bis 50 %, besonders bevorzugt von 30 % bis 40 % auf. Der Glasfaseranteil im polymeren Grundkörper verbessert gleichzeitig die Festigkeit und Stabilität.

In einer weiteren bevorzugten Ausführungsform ist der polymere Grundkörper gefüllt durch Glashohlkugeln oder Glasblasen. Diese Glashohlkugeln haben einen Durchmesser von 10 $\mu$m bis 20 $\mu$m und verbessern die Stabilität des polymeren Hohlprofils. Geeignete Glaskugeln sind unter dem Namen "3M™ Glass Bubbles" käuflich erhältlich. Besonders bevorzugt enthält der polymere Grundkörper Polymere, Glasfasern und Glaskugeln. Eine Beimischung von Glaskugeln führt zu einer Verbesserung der thermischen Eigenschaften des Hohlprofils.

Die Isolierverglasung ist optional mit einem Schutzgas, beispielsweise mit einem Edelgas, vorzugsweise Argon oder Krypton befüllt, die den Wärmeübergangswert im Isolierverglasungszwischenraum reduzieren. In einer bevorzugten Ausführungsform ist die Isolierverglasung luftgefüllt.

Der Abstandhalter ist ein Hohlprofilabstandhalter und enthält optional eine oder mehrere Schottwände. Die Schottwände begrenzen den direkten Gasstrom durch die Hohlkammer und ermöglichen eine Variation des Hohlkammerraumes der in direkten Kontakt mit dem Druckausgleichskörper steht. Ein Gasaustausch durch die Schottwand hindurch ist nicht möglich, so dass der Gasstrom durch den Druckausgleichskörper die Hohlkammer nur in einer Richtung durchlaufen kann. Üblicherweise durchläuft der Gasstrom dabei zunächst einen Abschnitt des Hohlkörperabstandhalters, der über keine Lufteinlässe verfügt und wird vor Eintritt in den inneren Scheibenzwischenraum durch Kontakt mit dem Trockenmittel getrocknet. Derartige Maßnahmen sind unter Verwendung des erfindungsgemäßen Druckausgleichskörpers in der Regel nicht erforderlich, da auch ohne diese aufwendigen Anordnungen eine ausreichend niedrige Feuchtigkeitsrate im inneren Scheibenzwischenraum erreicht wird. Trotz alledem ist eine derartige Kombination möglich um dem eintretenden Volumenstrom auch die verbleibende Feuchtigkeit zu entziehen.

An den Ecken der Isolierverglasung sind die Abstandhalter bevorzugt über Eckverbinder miteinander verknüpft. Derartige Eckverbinder können beispielsweise als Kunststoffformteil mit Dichtung ausgeführt sein, in dem zwei mit einem Gärungsschnitt versehene Abstandhalter zusammenstoßen. Grundsätzlich sind verschiedenste Geometrien der Isolierverglasung möglich, beispielsweise rechteckige, trapezförmige und abgerundete Formen. Zur Herstellung runder Geometrien kann der Abstandhalter beispielsweise im erwärmten Zustand gebogen werden.

Die Erfindung umfasst ferner ein Verfahren zur Herstellung einer erfindungsgemäßen Isolierverglasung mindestens umfassend die Schritte

a) Bereitstellung eines Abstandhalters,
b) Verkleben der ersten Scheibe und der zweiten Scheibe mit den Scheibenkontaktflächen des Abstandhalters über ein Dichtmittel,
c) Verpressen der Scheibenanordnung aus erster Scheibe, zweiter Scheibe und Abstandhalter,
d) Verfüllen des äußeren Scheibenzwischenraums mit einer äußeren Versiegelung,
e) Erzeugen einer Öffnung an der Außenfläche des Abstandhalters und
f) Einsetzten eines Druckausgleichskörpers in die Öffnung an der Außenfläche des Abstandhalters.

Die Öffnung wird bevorzugt in Form einer Bohrung in die Außenfläche des Abstandhalters eingebracht. Die Öffnung muss vor dem Einsetzen des Druckausgleichskörpers in Schritt f) erzeugt werden, allerdings muss Schritt e) Schritt f) nicht unmittelbar vorausgehen. Die Schritte e) und f) können entweder an einen beliebigen Zeitpunkt vor Schritt d) oder nach Schritt d) erfolgen.

Bevorzugt werden Schritte e) und f) nach Schritt d) ausgeführt, da in diesem Fall die Anlage zum Verfüllen der des Randbereichs (Schritt d)) nicht modifiziert werden muss.

Alternativ erfolgen Schritte e) und f) vor Schritt b). In diesem Fall ist die Anlage zum Einbringen der äußeren Versiegelung so zu modifizieren, dass sie den Druckausgleichskörper als Hindernis erkennt und umfährt. Dies ist vor allem bei Fertigung großer Stückzahlen sinnvoll.

In einer bevorzugten Ausgestaltung des Verfahrens wird ein Dichtmittel zwischen der Öffnung zum Einsetzen des Druckausgleichskörpers und dem Druckausgleichskörper selbst angeordnet.

Der Druckausgleichskörper wird bevorzugt mit einer reversiblen Abdeckung an der äußeren Oberfläche versehen. Die Abdeckung muss vor Montage der Isolierverglasung am Einbauort wieder entfernt werden um einen erfindungsgemäßen Druckausgleich über den Druckausgleichskörper zu ermöglichen. Die Abdeckung verhindert eine Verschmutzung des Druckausgleichskörpers während Herstellung und Transport der Isolierverglasung.

Sofern der verwendete Abstandhalter ein Hohlprofilabstandshalter ist, wird bevorzugt der Abstandhalter vor Schritt a) zu einem Rechteck vorgeformt. Dabei können die einzelnen Abstandhalterprofile beispielsweise mit einem Gärungsschnitt versehen und an den Ecken durch Eckverbinder verknüpft werden. Anstelle dessen können die Abstandhalter auch direkt miteinander verschweißt werden, beispielsweise mittels Ultraschallschweißen.

Sofern ein spritzbarer thermoplastischer Abstandhalter eingesetzt wird, so wird dieser aus einem Grundkörper enthaltend ein Dichtmaterial und ein Trockenmittel in den Zwischenraum zwischen erster Scheibe und zweiter Scheibe extrudiert.

Die Verklebung der Scheiben an den Scheibenkontaktflächen gemäß Schritt b) kann in einer beliebigen Reihenfolge durchgeführt werden. Optional kann die Verklebung beider Scheiben an den Scheibenkontaktflächen auch gleichzeitig erfolgen.

In einer möglichen Ausführungsform wird der innere Scheibenzwischenraum zwischen erster Scheibe und dritter Scheibe vor dem Verpressen der Scheibenanordnung mit einem Schutzgas gefüllt. In einer anderen Ausführungsform ist der innere Scheibenzwischenraum luftgefüllt.

In Schritt d) wird der äußere Scheibenzwischenraum zumindest teilweise, bevorzugt vollständig, mit einer äußeren Versiegelung verfüllt. Als äußere Isolierung wird beispielsweise eine plastische Abdichtmasse verwendet. Sofern der Druckausgleichskörper nach Verfüllen des äußeren Scheibenzwischenraums (nach Schritt d)) eingesetzt wird, so wird die äußere Versiegelung bei Erzeugung der Öffnung gemäß Schritt e) im Bereich der Öffnung entfernt.

Die Erfindung umfasst des Weiteren die Verwendung der erfindungsgemäßen Isolierverglasung im Gebäudeaußenbereich und/oder in Fassaden.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:

Figur 1a     einen Querschnitt einer Ausführungsform der erfindungsgemäßen Isolierverglasung mit einem Hohlprofilabstandhalter und einem Druckausgleichskörper mit Kapillare und Membran,

Figur 1b     einen Querschnitt einer weiteren Ausführungsform der erfindungsgemäßen Isolierverglasung mit einem Hohlprofilabstandhalter und einem Druckausgleichskörper mit Kapillare und Membran,

Figur 2     einen Querschnitt einer Ausführungsform des erfindungsgemäßen Druckausgleichskörpers umfassend eine Hülse und ein Einsteckteil mit einer Kapillare konstanten Durchmessers und einer Membran,

Figur 3     einen Querschnitt einer weiteren möglichen Ausführungsform des erfindungsgemäßen Druckausgleichskörpers umfassend eine Hülse und ein Einsteckteil mit einer Kapillare variablen Durchmessers

| | | |
|---|---|---|
| | | und einer Membran, |
| Figur 4 | | einen Querschnitt einer weiteren möglichen Ausführungsform des erfindungsgemäßen Druckausgleichskörpers umfassend einen monolithischen Grundkörper mit einer Kapillare konstanten Durchmessers und einer Membran auf der äußeren Oberfläche des Druckausgleichskörpers, |
| Figur 5 | | einen Querschnitt einer weiteren möglichen Ausführungsform des erfindungsgemäßen Druckausgleichskörpers umfassend einen monolithischen Grundkörper mit einer Kapillare konstanten Durchmessers und einer Membran auf der inneren Oberfläche des Druckausgleichskörpers, |
| Figur 6 | | eine Isolierverglasung umfassend einen Abstandhalterrahmen mit erfindungsgemäßem Druckausgleichskörper und einem perforierten Bereich in der Verglasungsinnenraumfläche des Abstandhalters und |
| Figur 7 | | ein Flussdiagramm einer möglichen Ausführungsform des erfindungsgemäßen Verfahrens, |
| Figuren 8a-c | | eine weitere erfindungsgemäße Ausführungsform eines Druckausgleichskörpers mit beweglich gelagerter Membran unter verschiedenen Druckzuständen, |
| Figur 9 | | eine Draufsicht auf einen Druckausgleichskörper gemäß Figur 2 oder Figur 3, |
| Figuren 10a-d | | eine schematische Darstellung der Verfahrensschritte bei Montage des Druckausgleichskörpers in einer Isolierverglasung. |

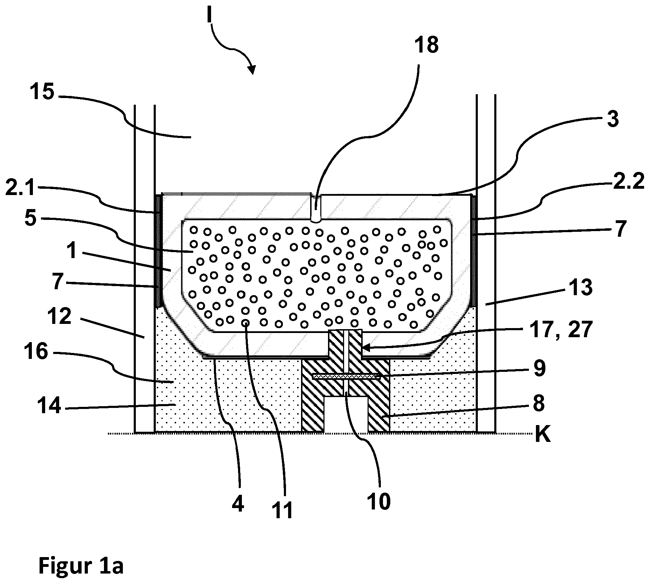

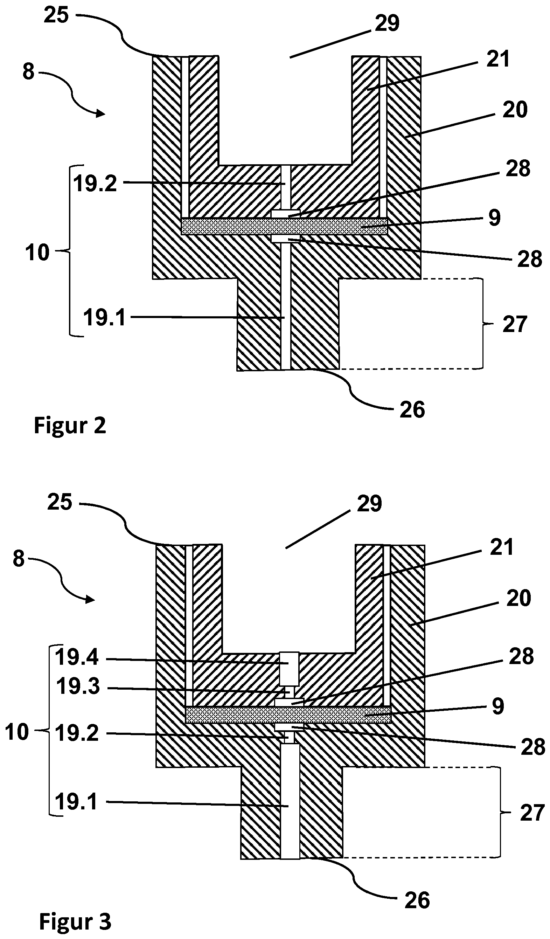

Figur 1a zeigt einen Querschnitt einer Ausführungsform der erfindungsgemäßen Isolierverglasung mit einem Hohlprofilabstandhalter und einem Druckausgleichskörper mit Kapillare und Membran Der Abstandshalter 1 umfasst eine erste Scheibenkontaktfläche 2.1, eine parallel dazu verlaufende zweite Scheibenkontaktfläche 2.2, eine Verglasungsinnenraumfläche 3 und eine Außenfläche 4. Die Außenfläche 4 verläuft senkrecht zu den Scheibenkontaktflächen 2.1, 2.2 und verbindet die Scheibenkontaktflächen 2.1 und 2.2. Die den Scheibenkontaktflächen 2.1 und 2.2 nächstliegenden Abschnitte der Außenfläche 4 sind in einem Winkel von ungefähr 45° zur Außenfläche 4 in Richtung der Scheibenkontaktflächen 2.1 und 2.2 geneigt. Zwischen der Außenfläche 4 und der Verglasungsinnenraumfläche 3 befindet sich eine Hohlkammer 5. Die erste Scheibe 12 der Isolierverglasung I ist über ein Dichtmittel 7 mit der ersten Scheibenkontaktfläche 2.1 des Abstandshalters 1 verbunden, während die zweite Scheibe 13 über ein Dichtmittel 7 mit der zweiten Scheibenkontaktfläche 2.2 verbunden ist. Der Zwischenraum zwischen erster Scheibe 12 und zweiter Scheibe 13, begrenzt durch die Verglasungsinnenraumfläche 3, ist dabei als der innere Scheibenzwischenraum 15 definiert. Über die Lufteinlässe 18 in der Verglasungsinnenraumfläche ist der innere Scheibenzwischenraum 15 mit der darunter liegenden Hohlkammer 5 verbunden. Die Lufteinlässe 18 sind gleichmäßig entlang des gesamten Abstandhalters 1 verteilt. In der Hohlkammer 5 befindet sich ein Trockenmittel 11, das die Luftfeuchtigkeit aus dem inneren Scheibenzwischenraum 15 entzieht. Der äußere Scheibenzwischenraum 16, der durch die Außenfläche 4 und die erste Scheibe 12 und die zweite Scheibe 13 begrenzt wird, ist vollständig mit der äußeren Versiegelung 14 verfüllt. Die erste Scheibe 12 und die zweite Scheibe 13 bestehen aus Kalk-Natron-Glas mit einer Dicke von jeweils 4 mm. Die Breite der Verglasungsinnenraumfläche 3, die den Abstand der ersten Scheibe 12 und der zweiten Scheibe 13 definiert, beträgt 35 mm. Diese Breite des Verglasungsinnenraums ist ausreichend um eine Jalousie aufzunehmen. In die Außenfläche 4 des Abstandhalters 1 ist über eine Öffnung 17, hier eine Bohrung, ein Druckausgleichskörper 8 eingelassen. Der Druckausgleichskörper 8 weist in dem Abschnitt, mit dem er in den Abstandhalter 1 eingesetzt ist eine Verengung 27 auf. Im Bereich der Verengung 27 befindet sich ein Gewinde (nicht gezeigt) über das der Druckausgleichskörper 8 in den Abstandhalter 1 eingeschraubt ist. Zwischen Druckausgleichskörper 8 und Abstandhalter 1 ist ein Dichtmittel 7 (nicht gezeigt) aufgebracht. Der Druckausgleichskörper 8 ist vollständig innerhalb des Randverbunds im Bereich der äußeren Versiegelung 14 angebracht und ragt nicht über die gemeinsame umlaufende Kante K der ersten Scheibe 12 und der zweiten Scheibe 13 hinaus. Der Druckausgleichskörper 8 umfasst eine Membran 9 und eine Kapillare 10. Die Details des Druckausgleichskörpers 8 sind in Figur 2 beschrieben.

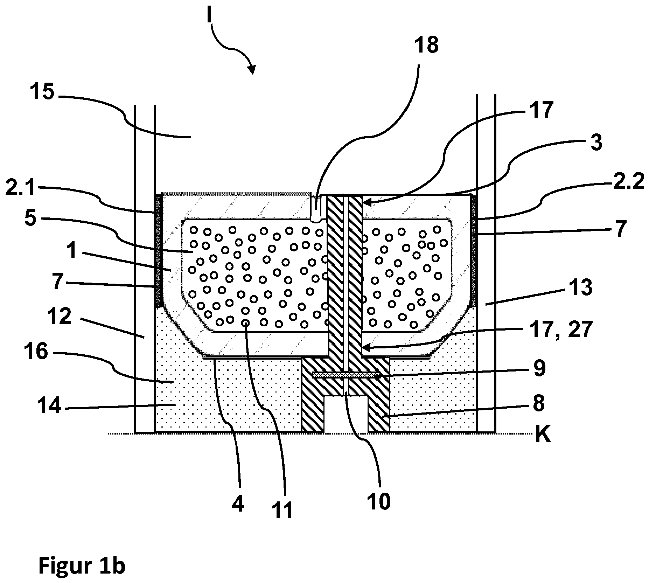

Figur 1b zeigt einen Querschnitt einer weiteren Ausführungsform der erfindungsgemäßen Isolierverglasung mit einem Hohlprofilabstandhalter und einem Druckausgleichskörper 8 mit Kapillare 10 und Membran 9. Der Aufbau entspricht im Wesentlichen dem in Figur 1a beschriebenen. Im Unterschied dazu ragt der Druckausgleichskörper 8 im Bereich der Verengung 27 durch den Abstandhalter 1 hindurch bis zur Verglasungsinnenraumfläche 3. Im Bereich der Verglasungsinnenraumfläche 3 weist der Abstandhalter 1 dazu eine weitere Öffnung 17 auf, die der Druckausgleichskörper 8 durchtritt.

Figur 2 zeigt einen Querschnitt der Ausführungsform des erfindungsgemäßen Druckausgleichskörpers 8 gemäß Figur 1a umfassend eine Hülse 20 und ein Aufsteckteil 21. Die Hülse 20 umfasst einen ersten Abschnitt 19.1 der Kapillare 10. Dieser erstreckt sich von einer inneren Oberfläche 26 des Druckausgleichskörpers 26 zur Membran 9. Die Membran 9 ist in die Hülse 20 eingelegt und zwischen dieser und dem Aufsteckteils 21 klemmend fixiert. Das Aufsteckteil 21 ist im Form einer Madenschraube ausgeführt, die in ein entsprechendes Gewinde der Hülse 20 (nicht gezeigt) eingeschraubt wird. Dadurch wird die Membran 9 sicher fixiert. Das Aufsteckteil 21 umfasst einen zweiten Abschnitt 19.2 der Kapillare 10. Der Druckausgleichskörper 8 wird so in den Abstandhalter 1 einer Isolierverglasung eingebracht, dass er mit der inneren Oberfläche 26 in der Außenfläche des Abstandhalters 1 eingelassen ist (siehe Figur 1). Im dem der inneren Oberfläche 26 benachbarten Bereich des Druckausgleichskörpers 8 weist dieser eine Verengung 27 auf. Die äußere Oberfläche 25 des Druckausgleichskörpers 8 ist im Einbauzustand in Richtung der äußeren Umgebung der Isolierverglasung orientiert. Das Aufsteckteil 21 weist einen zweiten Abschnitt 19.2 der Kapillare 10 auf, der die Atmosphäre mit der Membran 9 luftdurchlässig verbindet. Die Hülse 20 und das Einsteckteil 21 bestehen aus Edelstahl. Bei der Kapillare 10 handelt es sich um eine Bohrung mit einem Durchmesser von 0,3 mm, die in die Hülse 20 und das Aufsteckteil 21 eingebracht ist.

Die Kapillare 10 weist eine Gesamtlänge von 6 mm auf, wobei der erste Abschnitt 19.1 der Kapillare 10 eine Länge von 4 mm aufweist und der zweite Abschnitt 19.2 eine Länge von 2 mm besitzt. Die Membran 9 ist eine gesinterte PTFE-Membran mit einer Dicke von 0,2 mm und einer Luftdurchlässigkeit von 1,0 Litern pro Stunde auf einer Fläche von 1,1 mm$^2$ vor Einbau in den Druckausgleichskörper 8. An den unmittelbar an die Membran 9 grenzenden Enden des ersten Kapillarenabschnitts 19.1 und des zweiten Kapillarenabschnitts 19.2 befindet sich jeweils eine Aussparung 28 mit einer Tiefe von 0,25 mm und einem Durchmesser von 1,8 mm. Diese bewirkt ein freies Schwingen der Membran 9 und somit einen gleichmäßigen Luftstrom.

Figur 3 zeigt einen Querschnitt einer weiteren möglichen Ausführungsform des erfindungsgemäßen Druckausgleichskörpers 8 umfassend eine Hülse 20 und ein Aufsteckteil 21 mit einer Kapillare 10 variablen Durchmessers und einer Membran 9. Der Grundaufbau entspricht dem in Figur 2 beschriebenen Aufbau. Im Unterschied dazu weist die Kapillare 10 vier Abschnitte unterschiedlichen Innendurchmessers auf. Ein erster Abschnitt 19.1 mit einem Durchmesser von 0,8 mm und einer Länge von 3,0 mm benachbart zur inneren Oberfläche 26 des Druckausgleichskörpers 8 gefolgt von einem zweiten Abschnitt 19.2 mit einem Durchmesser von 0,3 mm und einer Länge von 1,0 mm sind in die Hülse 20 eingebracht. Ein dritter Abschnitt 19.3 mit einem Durchmesser von 0,3 mm und einer Länge von 1,0 mm und ein vierter Abschnitt 19.4 mit einem Durchmesser von 0,8 mm und einer Länge von 1,0 mm sind in das Aufsteckteil 21 eingebracht, wobei Abschnitt 19.3 in Nachbarschaft zur Membran 9 liegt. Diese Ausführungsform hat den Vorteil, dass der Anteil der Bohrung mit einem sehr kleinen Durchmesser von 0,3 mm reduziert wird. Dadurch ist die Bohrung mit wesentlich geringerem Zeit- und Kostenaufwand anzufertigen. Die Abschnitte der Kapillare, die den geringsten Innendurchmesser aufweisen sind in Nachbarschaft zur Membran angebracht um die Wasserdampfkonzentration in unmittelbarer Nachbarschaft zur Membran möglichst gering zu halten.

Beispiel und Vergleichsbeispiel

Die Erfinder haben diverse Versuche mit erfindungsgemäßen Druckausgleichskörpern sowie nach dem Stand der Technik bekannten Kapillarrohren durchgeführt. Die Versuche wurden in Anlehnung an die Normen DIN EN 1279-2 für Konstantklima alternierend mit Wechselklima und DIN EN 1279-6 für Konstantklima durchgeführt. Beide Normen gelten lediglich für Isolierverglasungen als geschlossene Systeme. Obwohl offene Systeme mit Druckausgleichskörper nicht innerhalb des Geltungsbereichs der Norm liegen, so ist es dennoch möglich diese zur Konstruktion des Versuchsaufbaus sowie zur Bewertung der Versuchsergebnisse heranzuziehen. Der durch den Index I beschriebene Feuchtigkeitsaufnahmefaktor, der die Beladung des Trockenmittels mit Wasser wiederspiegelt, muss bei geschlossenen Isolierverglasungen unterhalb von 8 % für DIN EN 1279-6 und unterhalb von 20 % für DIN EN 1279-2 liegen um die Norm zu erfüllen. Dieser Grenzwert ist für offene Systeme verständlicherweise schwieriger einzuhalten als für geschlossene Systeme.

In einer ersten Versuchsreihe wurde der Feuchtigkeitsaufnahmefaktor I gemäß DIN EN 1279-6 bei Konstantklima für eine Isolierverglasung gemäß Figur 1 umfassend einen Druckausgleichskörper gemäß Figur 2 mit verschiedenen alternativen Anordnungen verglichen. Als Vergleichsbeispiele wurden dabei ein Druckausgleichskörper ohne Kapillare sowie ein nach dem Stand der Technik bekanntes Kapillarrohr mit der erfindungsgemäßen Anordnung verglichen. Bei Beispiel und Vergleichsbeispiel wurden identisch aufgebaute Isolierverglasungen verwendet um die Aussagekraft der Versuche zu gewährleisten.

*Versuch 1*

Die Isolierverglasungssysteme mit unterschiedlichen Druckausgleichsmechanismen werden einem Test nach EN 1279-6 bei Konstantklima unterzogen. Die in Vergleichsbeispiel 2 und dem erfindungsgemäßen Beispiel 1 verwendeten Membranen sind baugleich und entsprechen der in Figur 2 beschriebenen Membran. Die Gesamtlänge der Kapillare ist im Fall des erfindungsgemäßen Druckausgleichskörpers die Summe der Kapillarenlängen in den einzelnen Abschnitten der Kapillare (siehe Figur 2).

**Tabelle 2**

|  | Vergleichsbeispiel 1 | Vergleichsbeispiel 2 | Beispiel 1 |
|---|---|---|---|
| Druckausgleich über | Kapillarrohr | Druckausgleichskörper mit Membran | Druckausgleichskörper mit Membran und Kapillare |
| Gesamtlänge Kapillare | 600 mm | - | 6 mm |
| Innendurchmesser Kapillare | 0,6 mm | - | 0,8 mm |
| Membran | - | gereckte mikroporöse PTFE Membran | gesinterte oder gereckte mikroporöse PTFE Membran |
| Index I | <8% | > 8% | < 8% |

Der Druckausgleichskörper mit Membran und ohne Kapillare gemäß Vergleichsbeispiel 2 weist keine hinreichende Barriere für Wasserdampf auf, so dass in diesem Fall ein Feuchtigkeitsaufnahmefaktor I im Bereich von weit über dem normgerechten Grenzwert von 8 % gemessen wurde. Die Verwendung eines Kapillarrohrs gemäß Vergleichsbeispiel 1 führt zwar zur gewünschten Einhaltung der Norm, allerdings sind Kapillarrohre aufgrund ihrer unvorteilhaften Länge nur schwierig in die Isolierverglasung zu integrieren. Kapillaren werden in der Regel in den Randbereich der Isolierverglasung eingelegt, der eine äußere Versiegelung enthält. Diese äußere Versiegelung wird bevorzugt automatisiert in den äußeren Scheibenzwischenraum eingespritzt. Dies ist bei Verwendung von Kapillaren nicht möglich, da das Kapillarrohr ein räumliches Hindernis bildet, das nicht automatisiert umfahrbar ist. Ferner muss die Randverfüllung das Kapillarrohr exakt umschließen und es dürfen keine Luftblasen im Randverbund eingeschlossen werden. Somit ist bei Einsatz von Kapillarrohren lokal eine manuelle Versiegelung notwendig. Die Erfinder konnten überraschenderweise feststellen, dass bereits die Kombination einer kurzen Kapillare mit einer Membran ausreicht um den Anforderungen der DIN EN 1279-6 zu genügen. Dieser synergetische Effekt war überraschend und unerwartet.

*Versuch 2*

In einem weiteren Versuch wurden eine Serie von erfindungsgemäßen Druckausgleichskörpern angefertigt, bei denen der Innendurchmesser der Kapillare variiert wird. Der Grundaufbau entspricht dabei dem in Figur 2 beschriebenen. Die in den erfindungsgemäßen Beispielen 1 bis 4 verwendeten Membranen sind baugleich und entsprechen der in Figur 2 beschriebenen Membran. Die Scheibenanordnungen wurden einem Test nach EN 1279-6 bei Konstantklima unterzogen.

**Tabelle 3**

|  | Beispiel 1 | Beispiel 2 | Beispiel 3 | Beispiel 4 |
|---|---|---|---|---|
| Druckausgleich über | Druckausgleichskörper mit Membran und Kapillare | | | |
| Gesamtlänge Kapillare | 6 mm | 6 mm | 6 mm | 6 mm |
| Innendurchmesser Kapillare | 0,8 mm | 0,6 | 0,4 mm | 0,3 mm |
| Membran | gesinterte mikroporöse PTFE Membran | siehe Beispiel 1 | siehe Beispiel 1 | siehe Beispiel 1 |
| Index I | 7% | 5 % | 3% | 1,5 % |

Mit kleiner werdendem Durchmesser der Kapillare sinkt auch der Wassereintrag in die Verglasung. Erstaunlicherweise bleibt der Volumenstrom bei Verkleinerung des Kapillarendurchmessers jedoch beinahe konstant. Für diesen scheint demnach vor allem die Durchlässigkeit der Membran entscheidend zu sein. Ergänzend zu den Ergebnissen aus Versuch 2 wurde der Luftvolumenstrom für einen erfindungsgemäßen Druckausgleichskörper mit Kapillarendurchmesser von 1,2 mm sowie 0,6 mm bestimmt. Bei einem Durchmeser von 1,2 mm beträgt der Volumenstrom 0,65 L/h bei einer Druckdifferenz von 30 mbar und einer durchströmten Fläche von 1,1 mm². Ein identischer Druckausgleichskörper mit einer Bohrung von 0,6 mm liefert unter gleichen Bedingungen einen nur unwesentlich kleineren Volumenstrom von 0,62 L/h. Somit kann auch bei kleineren Kapillardurchmessern ein hinreichend schneller Druckausgleich erfolgen, da die Steuerung des Volumenstroms vor allem über die Membran erfolgt.

Weitere Versuche bei Wechselklima gemäß DIN EN 1279-2 (hier nicht gezeigt) ergaben, dass Isolierverglasungen mit erfindungsgemäßem Druckausgleichskörper auch diese Norm zufriedenstellend erfüllen.

*Versuch 3*

In einem dritten Versuch wurde der erfindungsgemäße Druckausgleichskörper gemäß Beispiel 4 und Figur 2 mit einem erfindungsgemäßen Druckausgleichskörper gemäß Figur 3 (Beispiel 5) verglichen. Versuch 3 diente dabei als Modellversuch, bei dem die Druckausgleichskörper in einer Flaschenanordnung anstelle einer Isolierverglasung untersucht wurden. Die Druckausgleichskörper werden in den Verschluss einer Flasche definierten Volumens mit einer definierten Menge Trockenmittel eingebracht, wobei der Luftaustausch zwischen Flaschenvolumen und Umgebung vollständig über den Druckausgleichskörper verläuft. Eine derartige Versuchsanordnung ist sehr gut geeignet um verschiedene auf einfache Art und Weise zu vergleichen ohne zu diesem Zweck eine Isolierverglasung anfertigen zu müssen. Die für den Index I berechneten absoluten Werte des Flaschenversuchs (Versuch 3) sind dabei nicht mit den Werten der Versuche 1 und 2 vergleichbar, da die Diffusion von Gasen und Wasserdampf durch den Randverbund der Isolierverglasung im Flaschenversuch vernachlässigt wird. Der Druckausgleichskörper gemäß Figur 3 weist dabei mehrere Kapillarenabschnitte unterschiedlichen Durchmessers auf. Die Gesamtlänge der Kapillare ist die Summe der Kapillarenlängen in den einzelnen Abschnitten der Kapillare (siehe Figur 3). Die Flaschenanordnungen wurden einem Test nach EN 1279-6 bei Konstantklima unterzogen (siehe Tabelle 4).

**Tabelle 4**

| | Beispiel 4 | Beispiel 5 |
|---|---|---|
| Druckausgleich über | Druckausgleichskörper mit Membran und Kapillare | |
| Länge Kapillare | 6 mm | 6 mm |
| Innendurchmesser Kapillare | | |
| Abschnitt 1 | 0,3 mm | 0,8 mm |
| Abschnitt 2 | 0,3 mm | 0,3 mm |
| Abschnitt 3 | | 0,3 mm |
| Abschnitt 4 | | 0,8 mm |
| Membran | gesinterte mikroporöse PTFE Membran | siehe Beispiel 4 |
| Index I Flaschenversuch | 2% | 4% |

Auch der Druckausgleichskörper gemäß Figur 3 genügt somit den Anforderungen der EN 1279-6 im Flaschenversuch. Der Feuchtigkeitsaufnahmefaktor I hat sich zwar verschlechtert im Vergleich zu einer durchgehenden Bohrung mit 0,3 mm Durchmesser (Beispiel 4, Figur 2), es ist aber zu erwarten, dass die Erfordernisse der EN 1279-6 auch bei Einsatz eines Druckausgleichskörpers gemäß Figur 3 in einer Isolierverglasung erfüllt werden. Der Druckausgleichskörper gemäß Figur 3 ermöglicht somit eine einfache und kostengünstige Herstellung bei guter Feuchterückhaltung (Index I = 4 % im Flaschenversuch).

In Praxistests an Isolierverglasungen hat sich erwiesen, dass sich ein Druckausgleichskörper gemäß Figur 2 mit einer Kapillarbohrung mit konstantem Durchmesser von ungefähr 0,40 mm hinsichtlich Feuchterückhalt und Druckausgleich gut eignet und hinsichtlich der Herstellungskosten eine wirtschaftlich vorteilhafte Lösung bietet.

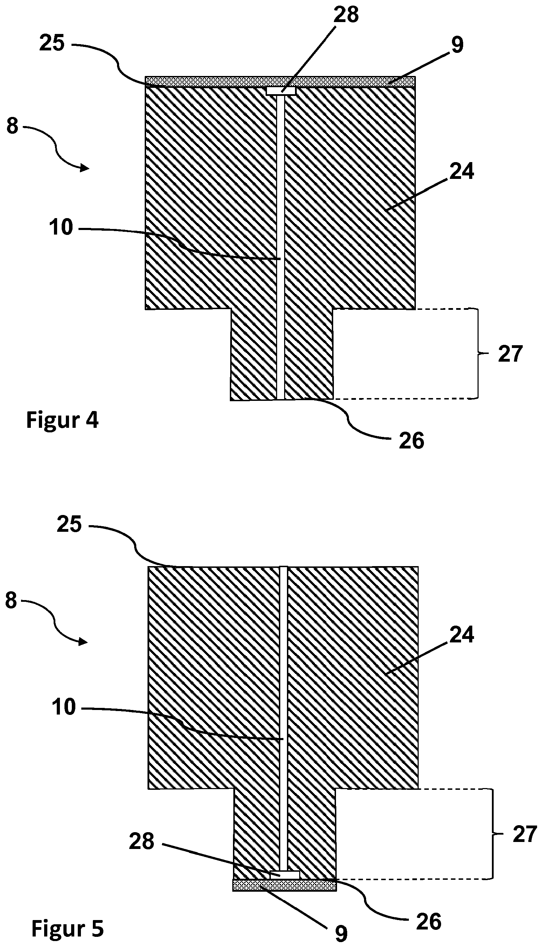

Figur 4 zeigt einen Querschnitt einer weiteren möglichen Ausführungsform des erfindungsgemäßen Druckausgleichskörpers 8 umfassend einen monolithischen Grundkörper 24 mit Kapillare 10 und einer Membran 9 auf der äußeren Oberfläche 25 des Druckausgleichskörpers 8. Der Druckausgleichskörper 8 wird so in den Abstandhalter 1 einer Isolierverglasung eingebracht, dass er mit der inneren Oberfläche 26 in der Außenfläche des Abstandhalters 1 eingelassen ist (siehe Figur 1). Im dem der inneren Oberfläche 26 benachbarten Bereich des Druckausgleichskörpers 8 weist dieser eine Verengung 27 auf. Die äußere Oberfläche 25 des Druckausgleichskörpers 8 ist im Einbauzustand in Richtung der äußeren Umgebung der Isolierverglasung orientiert. Der monolithische Grundkörper 24 weist eine zwischen äußerer Oberfläche 25 und innerer Oberfläche 26 durchgehende Kapillare 10 konstanten Durchmessers auf. Der monolithische Grundkörper 24 besteht aus Polyethylenvinylalkohol und ist beispielsweise als Spritzgussteil gefertigt. Die Kapillare 10 ist ein Kapillarrohr aus Edelstahl mit einem Innendurchmesser von 0,25 mm und einem Außendurchmesser von 1,8 mm. Derartige Kapillarrohre sind kostengünstig kommerziell erhältlich. In den monolithischen Grundkörper 24 ist eine Bohrung entsprechend dem Außendurchmesser des Kapillarrohrs eingebracht, in die das Kapillarrohr eingeschoben ist. Diese Bohrung mit einem Durchmesser von 1,8 mm ist ebenfalls kostengünstig anzufertigen. Die Membran 9 ist eine gesinterte PTFE-Membran mit einer Dicke von 0,13 mm und einer Luftdurchlässigkeit von 1,0 Litern pro Stunde (bei einer Fläche von 1,1 mm$^2$) vor Montage auf dem Druckausgleichskörper 8. Die Membran ist über einen Klebstoff auf der äußeren Oberfläche 25 des Druckausgleichskörpers 8 aufgebracht, wobei der Bereich der Kapillare 10 ausgespart ist. Der Klebstoff dient gleichzeitig der Fixierung und der Abdichtung. Dadurch, dass die Membran 9 auf der äußeren Oberfläche 25 orientiert ist, wird der Eintritt von flüssigem Wasser in die Kapillare 10 vermieden. An dem unmittelbar an die Membran 9 grenzenden Ende der Kapillare 10 befindet sich eine Aussparung 28 mit einer Tiefe von 0,25 mm und einem Durchmesser von 1,8 mm.

Figur 5 zeigt einen Querschnitt einer weiteren möglichen Ausführungsform des erfindungsgemäßen Druckausgleichskörpers 8 umfassend einen monolithischen Grundkörper 24 mit Kapillare 10 und einer Membran 9 auf der inneren Oberfläche 26 des Druckausgleichskörpers 8. Der Grundaufbau entspricht dem in Figur 4 beschriebenen. Im Unterschied dazu ist die Membran auf der inneren Oberfläche 26 des monolithischen Grundkörpers 24 über einen Klebstoff fixiert. Diese Ausführungsform ist vorteilhaft um die Membran gegen äußere mechanische Einflüsse beim Transport der Isolierverglasung zu schützen.

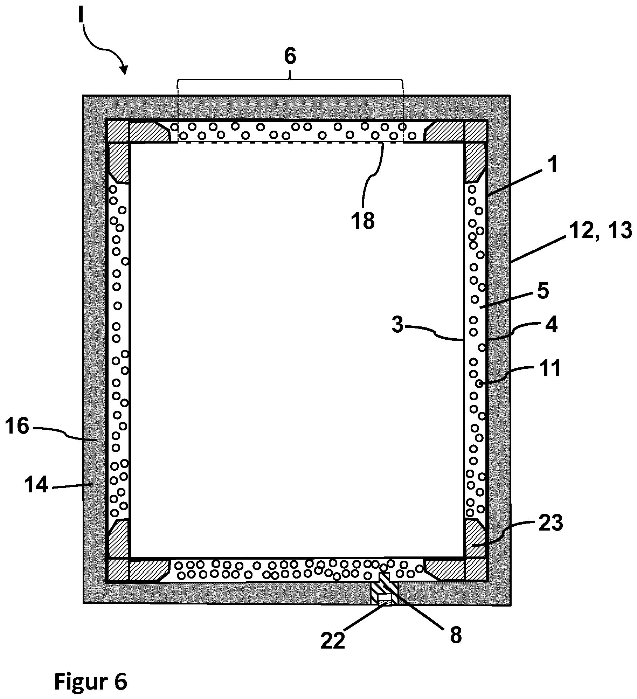

Figur 6 zeigt eine weitere Ausführungsform einer Isolierverglasung I umfassend einen Abstandhalterrahmen mit erfindungsgemäßem Druckausgleichskörper 8 und einem perforierten Bereich 6 in der Verglasungsinnenraumfläche 3 des Abstandhalters 1. Der Abstandhalter 1 des Abstandshalterrahmens entspricht im Wesentlichen dem in Figur 1 beschriebenen. Im Unterscheid zu Figur 1 sind die Lufteinlässe 18 nicht gleichmäßig entlang des gesamten Abstandhalterrahmens verteilt, sondern befinden sich nur in bestimmten Bereichen. Im vorliegenden Fall ist an der dem Druckausgleichskörper 8 gegenüberliegenden Kante des Abstandhalterrahmens ein perforierter Bereich 6 mit Lufteinlässen 18 in die Verglasungsinnenraumfläche 3 eingebracht. Die an den Kanten des Abstandhalterrahmens befindlichen Abstandhalter 1 sind an den Ecken der Isolierverglasung I über Eckverbinder 23 zusammengesteckt. Die Lufteinlässe 18 ermöglichen in diesem Bereich den Gasaustausch zwischen Hohlkammer 5 und innerem Scheibenzwischenraum 15. Die Lufteinlässe 18 sind als Schlitze mit einer Breite von 0,2 mm und einer Länge von 2 mm ausgeformt. Die Schlitze gewährleisten einen optimalen Luftaustausch ohne dass Trockenmittel 11 aus der Hohlkammer 5 in den Innenraum der Verglasung eindringen kann. Der Druckausgleich innerhalb des mit Trockenmittel 11 gefüllten Abstandhalters 1 erfolgt wie bereits beschrieben durch den Druckausgleichskörper 8. Ein durch den Druckausgleichskörper 8 eintretender Luftstrom fließt durch die Kapillarwirkung des mit Trockenmittel 11 gefüllten Abstandhalters 1 zunächst entlang des Bereichs ohne Lufteinlässe 18. Dabei passiert der Luftstrom das in der Hohlkammer des Abstandshalters eingebrachte Trockenmittel, während gleichzeitig ein Luftaustausch zwischen der Hohlkammer und dem Innenraum der Verglasung verhindert wird. Somit wird der Luftstrom zunächst vorgetrocknet, bevor er daraufhin im nachfolgenden permeablen Bereich 6 in den Innenraum der Isolierverglasung I eintritt. Derartige Maßnahmen zur weiteren Senkung der Luftfeuchtigkeit im inneren Scheibenzwischenraum 15 sind unter Verwendung des erfindungsgemäßen Druckausgleichskörpers 8 nicht notwendig, können aber optional vorgesehen werden. Der Druckausgleichskörper 8 verfügt über eine Abdeckung 22, welche nach Montage der Isolierverglasung I in einem Rahmen entfernt wird und die Verschmutzung des Druckausgleichskörpers 8 verhindert. Die Isolierverglasung I wird so in einen Fensterrahmen eingebaut, dass der Druckausgleichskörper 8 im oberen Drittel der Verglasung an einer senkrecht angeordneten Fläche zu liegen kommt und dadurch vor Stauwasser geschützt ist.

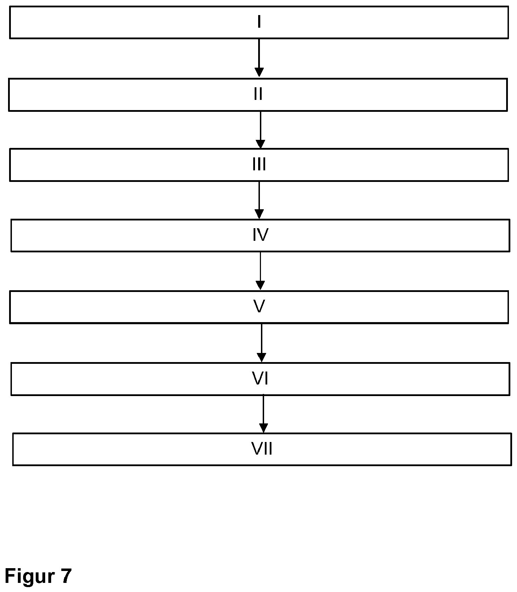

Figur 7 zeigt ein Flussdiagramm einer möglichen Ausführungsform des erfindungsgemäßen Verfahrens zur Herstellung einer Isolierverglasung umfassend die Schritte:

I Bereitstellen eines Abstandhalters 1

II Verkleben der ersten Scheibe 12 mit der ersten Scheibenkontaktfläche 2.1 des Abstandhalters 1 über ein Dichtmittel 7

III Verkleben der zweiten Scheibe 13 mit der zweiten Scheibenkontaktfläche 2.2 des Abstandhalters 1 über ein Dichtmittel 7

IV Verpressen der Scheibenanordnung aus den Scheiben 12 und 13 und dem Abstandhalter 1

V Verfüllen des äußeren Scheibenzwischenraums 16 mit einer äußeren Versiegelung 14

VI Bohren einer Öffnung 17 an der Außenfläche 4 des Abstandhalters 1

VII Einsetzen eines Druckausgleichskörpers 8 in die Öffnung 17 des Abstandhalters 1 unter Verwendung eines Dichtmittels 7

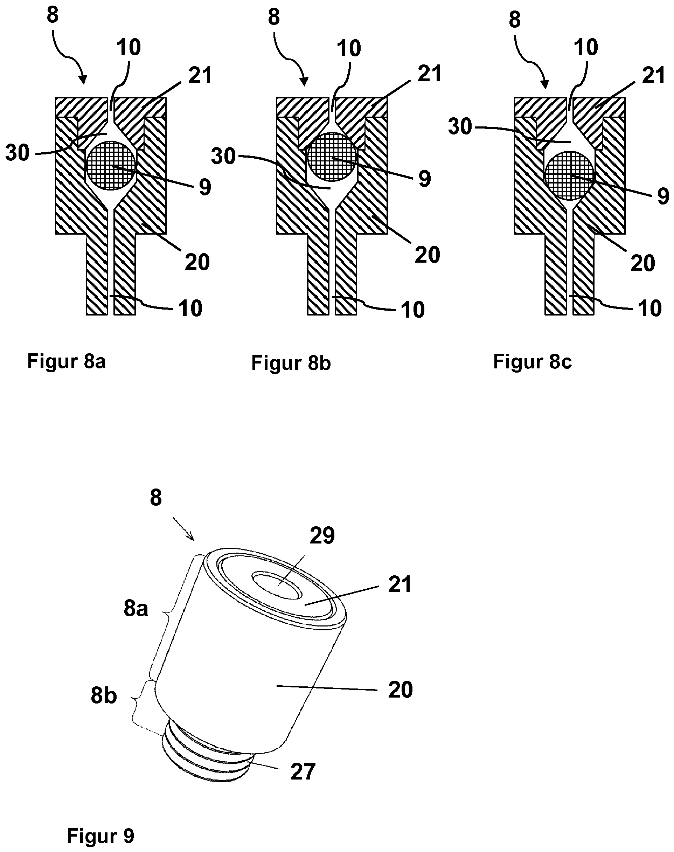

Figuren 8a, 8b und 8c zeigen eine weitere Ausführungsform des erfindungsgemäßen Druckausgleichskörpers 8 mit beweglich gelagerter Membran 9. Der Druckausgleichskörper 8 wird analog zu Figur 1a im Abstandhalter 1 einer Isolierverglasung I montiert. Der Übersicht halber ist in dieser Ansicht lediglich der Druckausgleichskörper 8 ohne Abstandhalter 1 gezeigt. Der Druckausgleichskörper 8 ist zweiteilig aus einer Hülse 20 mit Kapillare 10 und einem Aufsteckteil 21 mit Kapillare 10 ausgebildet. Das Aufsteckteil 21 kann auf die Hülse 20 aufgesteckt oder bevorzugt aufgeschraubt sein. Im Inneren des Druckausgleichskörpers 8 befindet sich ein Hohlraum 30, der im Einbauzustand über die Kapillare 10 in der Hülse 20 mit dem inneren Scheibenzwischenraum verbunden ist und über die Kapillare 10 des Aufsteckteils 21 mit der Umgebung. Der Luftaustausch zwischen innerem Scheibenzwischenraum und Umgebung erfolgt ausschließlich über den Hohlraum 30. Im Hohlraum 30 ist eine kugelförmige Membran 9 beweglich gelagert. Figur 8a zeigt die Anordnung im drucklosen Zustand, wobei der Innendruck der Isolierverglasung dem Umgebungsdruck entspricht. Die Membran 9 wird bevorzugt so dimensioniert, dass der Durchmesser der kugelförmigen Membran 9 im Wesentlichen dem Durchmesser des Hohlraums 30 entspricht und die Membran 9 somit bereits im drucklosen Zustand gemäß Figur 8a die Wandung des Hohlraums berührt. Dies führt dazu, dass auch bei kleinen Druckunterschieden eine schnelle Abdichtung durch die beweglich gelagerte Membran 9 erfolgt. Der Zustand der Membran 9 bei Überdruck in der Isolierverglasung I ist in Figur 8b gezeigt. Die den Enden der Kapillarabschnitte benachbarten Bereiche des Hohlraums 30 sind trichterförmig ausgeführt um als Aufnahme der kugelförmigen Membran 9 zu dienen und mit dieser einen Dichtbereich auszubilden, in dem sich die Wandung des Hohlraums 30 und die Membran 9 berühren. Die Membran 9 wird bei Überdruck in der Isolierverglasung I aus der neutralen Position der Figur 8a in den trichterförmigen Bereich des Hohlraums 30, der dem Aufsteckteil 21 benachbart ist, gedrückt (Figur 8b). Die Membran 9 dichtet dort ab, so dass der Luftaustausch durch den Druckausgleichskörper 8 hindurch vollständig über die Membran 9 stattfindet. Ist in der Isolierverglasung I ein Unterdruck vorhanden, so wird analog dazu die Membran 9 aus der neutralen Position (Figur 8a) in Richtung des dem inneren Scheibenzwischenraum benachbarten Bereichs des Hohlraums 30 verlagert. Auch dort befindet sich ein trichterförmiger Abschnitt des Hohlraums, an dem die Membran 9 anliegt und diesen verschließt (Figur 8c). So wird verhindert, dass Luft an der Membran 9 vorbei strömt. Der Luftaustausch erfolgt auch in diesem Druckzustand vollständig über die Membran 9. Hinsichtlich der Ausführungsform der Figur 8 gelten die in Figur 2 beschriebenen Vorteile der Kombination von Membran und Kapillare. Die Ausgestaltung der Figur 8 bietet des Weiteren den Vorzug der einfachen Montage. Die Membran muss nicht im Druckausgleichskörper fixiert werden, sondern kann lose in diesen eingesteckt werden. Ferner ergeben sich höhere Fertigungstoleranzen, da die Abdichtung zwischen Membran 9 und Druckausgleichskörper 8 durch Anpressen der Membran bei Druckunterschieden erfolgt und nicht bereits bei Einbau der Membran sichergestellt werden muss.

Figur 9 zeigt eine Draufsicht auf einen Druckausgleichskörper 8 gemäß einer der Ausführungsformen der Figuren 2 oder 3. Der Druckausgleichskörper 8 umfasst, wie bereits bei Figuren 2 und 3 beschrieben, eine Hülse 20, in die ein Aufsteckteil 21 eingesetzt ist. Das Aufsteckteil 29 weist eine Durchgangsöffnung 29 auf, über die Umgebungsluft an die Kapillare des Druckausgleichskörpers gelangt. In der Durchgangsöffnung 29 kann so ausgeformt sein, dass ein Werkzeug, beispielsweise ein Sechskant, darin eingreifen kann um das Aufsteckteil 21 mit der Hülse 20 zu verschrauben. Der Druckausgleichskörper 8 weist einen ersten Abschnitt 8a auf, der sich nach Montage des Druckausgleichskörpers 8 im Bereich der äußeren Versiegelung 14 befindet, und einen zweiten Abschnitt 8b auf, der der Befestigung des Druckausgleichskörpers 8 dient. Im Bereich des zweiten Abschnitts 8b befindet sich eine Verjüngung 27 mit Gewinde über die der Druckausgleichskörper 8 in den Abstandhalter eingeschraubt wird.

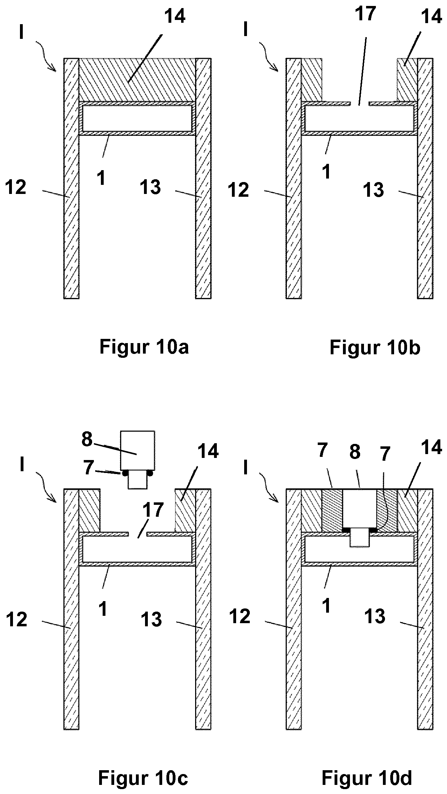

Figuren 10 a-d zeigen eine schematische Darstellung der Verfahrensschritte bei Montage eines Druckausgleichskörpers 8 in einer Isolierverglasung I. Figur 10a zeigt eine Isolierverglasung I gemäß Figur 1a mit dem Unterschied, dass in Figur 10a noch kein Druckausgleichskörper 3 eingesetzt ist. Bezüglich anderer Merkmale entspricht die Isolierverglasung I der in Figur 1a beschriebenen. Das Trockenmittel innerhalb des Abstandhalters 1 ist in Figuren 10 a-d der besseren Übersicht halber nicht gezeigt. Zum Einsetzen des Druckausgleichskörpers wird ein Teil der äußeren Versiegelung 14 entfernt um im Bereich des freigelegten Abstandhalters 1 eine Öffnung 17 in der Außenfläche des Abstandhalters 1 geschaffen, beispielsweise gebohrt (Figur 10b). Die Öffnung 17 wird so dimensioniert, dass ein Druckausgleichskörper 8 gemäß Figur 9 im Bereich der Verjüngung 27 in den Abstandhalter 1 eingesetzt werden kann. Der Druckausgleichskörper 8 wird im Bereich der Verjüngung 27, unmittelbar angrenzend an den ersten Abschnitt des Druckausgleichskörpers 8, mit einem umlaufenden Strang aus Dichtmittel 7 versehen (siehe Figur 10c). Der Dichtmittelstrang wird beim Einsetzen des Druckausgleichskörpers 8 in die Außenfläche des Abstandhalters derart mit den benachbarten Komponenten verpresst, dass das Dichtmittel 7 die Öffnung 17 am Druckausgleichskörper 8 abdichtet und einen an der äußeren Seite des Druckausgleichskörpers 8 vorbeifließenden Luftstrom unterbindet. Nach Einsetzen des Druckausgleichskörpers 8 wird der den Druckausgleichskörper 8 umgebende Bereich, in dem die äußere Versiegelung 14 entfernt wurde, mit Dichtmittel 7 verfüllt (Figur 10d). Um sicherzustellen, dass dabei kein Dichtmittel in die Durchgangsöffnung 29 des Aufsteckteils 21 gelangt, kann der Druckausgleichskörper 8 temporär mit einer nicht gezeigten Abdeckung versehen werden, die danach wieder entfernt wird.

**Bezugszeichenliste**

I  Isolierverglasung

1  Abstandhalter
2  Scheibenkontaktflächen
2.1  erste Scheibenkontaktfläche
2.2  zweite Scheibenkontaktfläche
3  Verglasungsinnenraumfläche
4  Außenfläche
5  Hohlkammer
6  permeabler Bereich
7  Dichtmittel
8  Druckausgleichskörper
8a  erster Abschnitt des Druckausgleichskörpers 8
8b  zweiter Abschnitt des Druckausgleichskörpers 8
9  Membran
10  Kapillare
11  Trockenmittel
12  erste Scheibe
13  zweite Scheibe
14  äußere Versiegelung
15  innerer Scheibenzwischenraum
16  äußerer Scheibenzwischenraum
17  Öffnung
18  Lufteinlass
19  Abschnitte der Kapillare 10
19.1  erster Abschnitt der Kapillare 10
19.2  zweiter Abschnitt der Kapillare 10
20  Hülse
21  Aufsteckteil
22  Abdeckung
23  Steckverbinder
24  monolithischer Grundkörper
25  äußere Oberfläche des Druckausgleichskörpers 8
26  innere Oberfläche des Druckausgleichskörpers 8
27  Verjüngung
28  Aussparung
29  Durchgangsöffnung in Aufsteckteil 21
30  Hohlraum

K  gemeinsame umlaufende Kante der ersten Scheibe 12 und der zweiten Scheibe 13

**Patentansprüche**

**1.** Isolierverglasung mit Druckausgleichskörper (8) zum permanenten Druckausgleich der Isolierverglasung umfassend eine Kapillare (10) und Membran (9) mindestens umfassend eine erste Scheibe (12), eine zweite Scheibe (13) und einen umlaufenden Abstandhalter (1) mit einer ersten Scheibenkontaktfläche (2.1), einer parallel dazu verlaufenden zweiten Scheibenkontaktfläche (2.2), einer Verglasungsinnenraumfläche (3) und einer Außenfläche (4), wobei

- die erste Scheibe (12) an der ersten Scheibenkontaktfläche (2.1) angebracht ist und die zweite Scheibe (13) an der zweiten Scheibenkontaktfläche (2.2) angebracht ist,
- die erste Scheibe (12), die zweite Scheibe (13) und die Verglasungsinnenraumfläche (3) einen inneren Scheibenzwischenraum (15) umschließen,

- die erste Scheibe (12), die zweite Scheibe (13) und die Außenfläche (4) einen äußeren Scheibenzwischenraum (16) umschließen,
- der Druckausgleichskörper (8) in eine Öffnung (17) an der Außenfläche (4) des Abstandhalters (1) eingesetzt ist,
- der Druckausgleichskörper (8) mindestens eine gasdurchlässige Membran (9) und mindestens eine Kapillare (10) enthält,
- der innere Scheibenzwischenraum (15) über die Kapillare (10) und die Membran (9) gasdurchlässig mit der Atmosphäre verbunden ist und
- die Kapillare (10) in mindestens einem Abschnitt (19) einen Innendurchmesser von kleiner oder gleich 1,2 mm aufweist.

2. Isolierverglasung nach Anspruch 1, wobei mindestens ein erster Abschnitt (19.1) der Kapillare (10) zwischen Membran und innerem Scheibenzwischenraum (15) liegt.

3. Isolierverglasung nach Anspruch 2, wobei ein zweiter Abschnitt (19.2) der Kapillare (10) zwischen Membran (9) und umgebender Atmosphäre angeordnet ist.

4. Isolierverglasung nach Anspruch 3, wobei die Membran (9) zwischen dem ersten Abschnitt (19.1) der Kapillare (10) und dem zweiten Abschnitt (19.2) der Kapillare (10) fixiert ist oder beweglich gelagert ist, bevorzugt fixiert ist.

5. Isolierverglasung nach Anspruch 2, wobei ein zweiter Abschnitt (19.2) der Kapillare (10) an den ersten Abschnitt (19.1) der Kapillare (10) grenzt und die Membran (9) benachbart zur umgebenden Atmosphäre angeordnet ist.

6. Isolierverglasung nach einem der Ansprüche 1 bis 5, wobei die Kapillare (10) in mindestens einem Abschnitt (19) einen Durchmesser von kleiner oder gleich 0,80 mm, bevorzugt kleiner oder gleich 0,60 mm, besonders bevorzugt kleiner oder gleich 0,50 mm, insbesondere ungefähr 0,40 mm aufweist.

7. Isolierverglasung nach einem der Ansprüche 1 bis 6, wobei mindestens einer der unmittelbar an die Membran (9) grenzenden Kapillarenabschnitte (19) eine Aussparung (28) in Nachbarschaft zur Membran (9) umfasst.

8. Isolierverglasung nach einem der Ansprüche 1 bis 7, wobei die Membran (9) ein Polymer aus der Gruppe der Polyhalogenolefine oder eine metalloxidhaltige Keramik, bevorzugt Polytetrafluorethylen, umfasst.

9. Isolierverglasung nach einem der Ansprüche 1 bis 8, wobei die Gesamtlänge der Kapillare (10) kleiner oder gleich 6 cm, bevorzugt kleiner oder gleich 2 cm, besonders bevorzugt kleiner oder gleich 1 cm beträgt.

10. Isolierverglasung nach einem der Ansprüche 1 bis 9, wobei der Abstandhalter (1) mindestens eine Hohlkammer (5) umfasst, in die der Druckausgleichskörper (7) über die Öffnung (17) eingesetzt ist.

11. Isolierverglasung nach Anspruch 10, wobei die Verglasungsinnenraumfläche (3) mindestens einen permeablen Bereich (6) umfasst, der die Hohlkammer (5) mit dem inneren Scheibenzwischenraum (15) gasdurchlässig verbindet.

12. Isolierverglasung nach einem der Ansprüche 1 bis 11, wobei der Druckausgleichskörper (7) Metalle oder gasdichte Kunststoffe, bevorzugt Aluminium, Edelstahl, Polyethylenvinylalkohol (EVOH), Polyethylen niederer Dichte (LDPE), biaxial orientierte Polypropylen-Folie (BOPP) und/oder Copolymere und/oder Gemische davon, besonders bevorzugt Aluminium, Edelstahl oder Polyethylenvinylalkohol enthält.

13. Isolierverglasung nach einem der Ansprüche 1 bis 12, wobei der Abstandhalter einen polymeren Grundkörper umfasst und die Außenfläche (4) des Abstandhalters (1) eine gasdichte und dampfdichte Barriere aufweist.

14. Verfahren zur Herstellung einer Isolierverglasung nach einer der Ansprüche 1 bis 13, wobei zumindest

a) ein Abstandhalter (1) mit einer ersten Scheibenkontaktfläche (2.1), einer parallel dazu verlaufenden zweiten Scheibenkontaktfläche (2.2), einer Verglasungsinnenraumfläche (3) und einer Außenfläche (4) bereitgestellt wird,
b) die erste Scheibe (12) mit der ersten Scheibenkontaktfläche (2.1) des Abstandhalters (1) über ein Dichtmittel (7) verbunden wird und
die zweite Scheibe (13) mit der zweiten Scheibenkontaktfläche (2.2) des Abstandhalters (1) über ein Dichtmittel (7) verbunden wird,

c) die Scheibenanordnung aus den Scheiben (12, 13) und dem Abstandhalter (1) miteinander verpresst wird,

d) ein äußerer Scheibenzwischenraum (12) zwischen der ersten Scheibe (1), der zweiten Scheibe (2) und dem Abstandshalter (3) mit einer äußeren Versiegelung (16) gefüllt wird,

e) eine Öffnung (17) an der Außenfläche (4) des Abstandhalters (1) erzeugt wird und

f) ein Druckausgleichskörper (7) in die Öffnung (17) des Abstandhalters (1) eingesetzt wird.

wobei Schritte e) und f) vor oder nach Schritt d) erfolgen können.

**15.** Verfahren zur Herstellung einer Isolierverglasung (I) nach Anspruch 14, wobei der Druckausgleichskörper in Schritt f) reversibel mit einer Abdeckung (22) verschlossen wird.

**16.** Verwendung der Isolierverglasung nach einem der Ansprüche 1 bis 13 als Isolierverglasung, bevorzugt im Gebäudeaußenbereich und/oder in Fassaden.

**Claims**

**1.** Insulating glazing having a pressure equalization body (8) comprising a capillary (10) and a membrane (9) for permanent pressure equalization of the insulating glazing, at least comprising a first pane (12), a second pane (13), and a circumferential spacer (1) with a first pane contact surface (2.1), a second pane contact surface (2.2) running parallel thereto, a glazing interior surface (3), and an outer surface (4),
wherein

- the first pane (12) is mounted on the first pane contact surface (2.1) and the second pane (13) is mounted on the second pane contact surface (2.2),
- the first pane (12), the second pane (13), and the glazing interior surface (3) enclose an inner interpane space (15),
- the first pane (12), the second pane (13), and the outer surface (4) enclose an outer interpane space (16),
- the pressure equalization body (8) is inserted into an opening (17) on the outer surface (4) of the spacer (1),
- the pressure equalization body (8) contains at least one gas-permeable membrane (9) and at least one capillary (10),
- the inner interpane space (15) is gas-permeably connected to the atmosphere via the capillary (10) and the membrane (9), and
- the capillary (10) has, in at least one section (19), an inner diameter less than or equal to 1.2 mm.

**2.** Insulating glazing according to claim 1, wherein at least one first section (19.1) of the capillary (10) lies between the membrane and the inner interpane space (15).

**3.** Insulating glazing according to claim 2, wherein a second section (19.2) of the capillary (10) is arranged between the membrane (9) and the surrounding atmosphere.

**4.** Insulating glazing according to claim 3, wherein the membrane (9) is fixed or is movably mounted, preferably is fixed, between the first section (19.1) of the capillary (10) and the second section (19.2) of the capillary (10).

**5.** Insulating glazing according to claim 2, wherein a second section (19.2) of the capillary (10) is adjacent the first section (19.1) of the capillary (10), and the membrane (9) is arranged adjacent the surrounding atmosphere.

**6.** Insulating glazing according to one of claims 1 through 5, wherein the capillary (10) has, in at least one section (19), a diameter less than or equal to 0.80 mm, preferably less than or equal to 0.60 mm, particularly preferably less than or equal to 0.50 mm, in particular approx. 0.40 mm.

**7.** Insulating glazing according to one of claims 1 through 6, wherein at least one of the capillary sections (19) directly adjacent the membrane (9) includes a recess (28) in the vicinity of the membrane (9).

**8.** Insulating glazing according to one of claims 1 through 7, wherein the membrane (9) includes a polymer from the group of polyhalo-olefins or a metal oxide-containing ceramic, preferably polytetrafluoroethylene.

**9.** Insulating glazing according to one of claims 1 through 8, wherein the total length of the capillary (10) is less than or equal to 6 cm, preferably less than or equal to 2 cm, particularly preferably less than or equal to 1 cm.

10. Insulating glazing according to one of claims 1 through 9, wherein the spacer (1) includes at least one hollow chamber (5), into which the pressure equalization body (7) is inserted via the opening (17).

11. Insulating glazing according to claim 10, wherein the glazing interior surface (3) includes at least one permeable region (6), which gas-permeably connects the hollow chamber (5) to the inner interpane space (15).

12. Insulating glazing according to one of claims 1 through 11, wherein the pressure equalization body (7) contains metals or gas-tight plastics, preferably aluminum, stainless steel, polyethylene vinyl alcohol (EVOH), low-density polyethylene (LDPE), biaxially oriented polypropylene film (BOPP), and/or copolymers and/or mixtures thereof, particularly preferably aluminum, stainless steel, or polyethylene vinyl alcohol.

13. Insulating glazing according to one of claims 1 through 12, wherein the spacer includes a polymeric main body and the outer surface (4) of the spacer (1) has a gas-tight and vapor-tight barrier.

14. Method for producing an insulating glazing according to one of claims 1 through 13, wherein at least

> a) one spacer (1) with a first pane contact surface (2.1), one second pane contact surface (2.2) running parallel thereto, one glazing interior surface (3), and one outer surface (4) is provided,
> b) the first pane (12) is connected to the first pane contact surface (2.1) of the spacer (1) via a sealant (7), and the second pane (13) is connected to the second pane contact surface (2.2) of the spacer (1) via a sealant (7),
> c) the pane assembly comprising the panes (12, 13) and the spacer (1) is pressed together,
> d) an outer interpane space (12) between the first pane (1), the second pane (2), and the spacer (3) is filled with an outer seal (16),
> e) an opening (17) is produced on the outer surface (4) of the spacer (1), and
> f) a pressure equalization body (7) is inserted into the opening (17) of the spacer (1). wherein steps e) and f) can occur before or after step d).

15. Method for producing an insulating glazing (I) according to claim 14, wherein in step f), the pressure equalization body is reversibly closed with a cover (22).

16. Use of the insulating glazing according to one of claims 1 through 13 as an insulating glazing, preferably in the building exterior sector and/or in façades.

**Revendications**

1. Vitrage isolant ayant un corps d'équilibrage de pression (8) pour l'équilibrage de pression permanent du vitrage isolant comportant un capillaire (10) et une membrane (9), au moins comportant une première plaque (12), une seconde plaque (13) et un espaceur périphérique (1) ayant une première surface de contact de plaque (2.1), une seconde surface de contact de plaque (2.2) s'étendant parallèlement à celle-ci, une surface d'espace interne de vitrage (3) et une surface externe (4),
où

> - la première plaque (12) est appliquée sur la première surface de contact de plaque (2.1) et la seconde plaque (13) est appliquée sur la seconde surface de contact de la plaque (2.2) ;
> - la première plaque (12), la seconde plaque (13) et la surface d'espace interne de vitrage (3) entourent un espace entre plaques interne (15) ;
> - la première plaque (12), la seconde plaque (13) et la surface externe (4) entourent un espace entre plaques externe (16) ;
> - le corps d'équilibrage de pression (8) est introduit dans une ouverture (17) sur la surface externe (4) de l'espaceur (1) ;
> - le corps d'équilibrage de pression (8) contient au moins une membrane perméable aux gaz (9) et au moins un capillaire (10) ;
> - l'espace entre plaques interne (15) est relié à l'atmosphère de manière perméable aux gaz par l'intermédiaire du capillaire (10) et de la membrane (9) ; et
> - le capillaire (10) présente, dans au moins une partie (19), un diamètre interne inférieur ou égal à 1,2 mm.

**2.** Vitrage isolant selon la revendication 1, dans lequel au moins une première partie (19.1) du capillaire (10) se situe entre la membrane et l'espace entre plaques interne (15).

**3.** Vitrage isolant selon la revendication 2, dans lequel une seconde partie (19.2) du capillaire (10) est disposée entre la membrane (9) et l'atmosphère environnante.

**4.** Vitrage isolant selon la revendication 3, dans lequel la membrane (9) est fixée ou est supportée de manière déplaçable, de préférence est fixée, entre la première partie (19.1) du capillaire (10) et la seconde partie (19.2) du capillaire (10).

**5.** Vitrage isolant selon la revendication 2, dans lequel une seconde partie (19.2) du capillaire (10) est disposée adjacente à la première partie (19.1) du capillaire (10) et la membrane (9) est disposée au voisinage de l'atmosphère environnante.

**6.** Vitrage isolant selon l'une des revendications 1 à 5, dans lequel le capillaire (10) présente, dans au moins une partie (19), un diamètre inférieur ou égal à 0,80 mm, de préférence inférieur ou égal à 0,60 mm, de façon particulièrement préférée inférieur ou égal à 0,50 mm, notamment d'environ 0,40 mm.

**7.** Vitrage isolant selon l'une des revendications 1 à 6, dans lequel au moins l'une des parties de capillaire (19) immédiatement adjacentes à la membrane (9) comporte un évidement (28) à proximité de la membrane (9).

**8.** Vitrage isolant selon l'une des revendications 1 à 7, dans lequel la membrane (9) comporte un polymère choisi dans le groupe constitué par les polyhalooléfines ou une céramique à teneur en oxyde métallique, de préférence le polytétrafluoroéthylène.

**9.** Vitrage isolant selon l'une des revendications 1 à 8, dans lequel la longueur totale du capillaire (10) est inférieure ou égale à 6 cm, de préférence inférieure ou égale à 2 cm, de façon particulièrement préférée inférieure ou égale à 1 cm.

**10.** Vitrage isolant selon l'une des revendications 1 à 9, dans lequel l'espaceur (1) comporte au moins une chambre creuse (5) dans laquelle le corps d'équilibrage de pression (7) est introduit par l'ouverture (17) .

**11.** Vitrage isolant selon la revendication 10, dans lequel la surface d'espace interne de vitrage (3) comporte au moins une zone perméable (6) qui relie la chambre creuse (5) à l'espace entre plaques interne (15) de manière perméable aux gaz.

**12.** Vitrage isolant selon l'une des revendications 1 à 11, dans lequel le corps d'équilibrage de pression (7) contient des métaux ou des matières plastiques étanches aux gaz, de préférence l'aluminium, l'acier inoxydable, le polyéthylène alcool vinylique (EVOH), le polyéthylène basse densité (LDPE), un film de polypropylène orienté biaxialement (BOPP) et/ou les copolymères et/ou les mélanges de ceux-ci, de manière particulièrement préférée l'aluminium, l'acier inoxydable ou le polyéthylène alcool vinylique.

**13.** Vitrage isolant selon l'une des revendications 1 à 12, dans lequel l'espaceur comporte un corps de base polymère et la surface externe (4) de l'espaceur (1) présente une barrière étanche aux gaz et à la vapeur.

**14.** Procédé de fabrication d'un vitrage isolant selon l'une des revendications 1 à 13, dans lequel au moins.

a) un espaceur (1) ayant une première surface de contact de plaque (2.1), une seconde surface de contact de plaque (2.2) s'étendant parallèlement à celle-ci, une surface d'espace interne de vitrage (3) et une surface externe (4) est mis à disposition ;
b) la première plaque (12) est reliée à la première surface de contact de plaque (2.1) de l'espaceur (1) par un matériau d'étanchéité (7), et la seconde plaque (13) est reliée à la seconde surface de contact de plaque (2.2) de l'espaceur (1) par un matériau d'étanchéité (7) ;
c) l'agencement de plaques constitué par les plaques (12, 13) et l'espaceur (1) est compacté ensemble ;
d) un espace entre plaques externe (12) entre la première plaque (1), la seconde plaque (2) et l'espaceur (3) est rempli par un scellement externe (16) ;
e) une ouverture (17) est créée sur la surface externe (4) de l'espaceur (1) ; et
f) un corps d'équilibrage de pression (8) est introduit dans l'ouverture (17) de l'espaceur (1),

les étapes e) et f) pouvant avoir lieu avant ou après l'étape d).

15. Procédé de fabrication d'un vitrage isolant (I) selon la revendication 14, dans lequel le corps d'équilibrage de pression est fermé de manière réversible par un capot (22) à l'étape f).

16. Utilisation du vitrage isolant selon l'une quelconque des revendications 1 à 13 comme vitrage isolant, de préférence dans la partie extérieure de bâtiments et/ou en façade.

**Figur 1a**

**Figur 1b**

**Figur 2**

**Figur 3**

**Figur 4**

**Figur 5**

I

6

1

12, 13

5

4

11

3

18

16

14

23

22

8

**Figur 6**

**Figur 7**

**Figur 8a**

**Figur 8b**

**Figur 8c**

**Figur 9**

Figur 10a

Figur 10b

Figur 10c

Figur 10d

**EP 3 721 041 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2006481 A2
- CH 687937 A5
- WO 2017064160 A
- US 20120017524 A1
- EP 0345211 A2
- US 20050034386 A1
- WO 9002239 A
- WO 2014095097 A1
- WO 2013104507 A1
- DE 69607473
- WO 2015197491 A1
- WO 2014198431 A1
- DE 102009006062 A1
- WO 2007101964 A1
- EP 0912455 B1
- DE 19927683 C1
- EP 1218307 B1
- EP 1917222 B1